# EUROPEAN PATENT SPECIFICATION

(11) **EP 3 534 565 B1**
(45) Date of publication and mention of the grant of the patent: **09.09.2020**
(21) Application number: 17865571.8
(22) Date of filing: 18.10.2017
(51) Int. Cl.: H04L 9/08, G06Q 20/08, G06Q 20/20, G06Q 20/32, G06Q 20/38, G06Q 20/40, H04L 9/14, H04L 9/30, H04L 29/06

(54) **DATA TRANSMISSION METHOD, APPARATUS AND SYSTEM**
DATENÜBERTRAGUNGSVERFAHREN, -VORRICHTUNG UND -SYSTEM
PROCÉDÉ, APPAREIL ET SYSTÈME DE TRANSMISSION DE DONNÉES

(30) Priority: 26.10.2016 CN 201610950976
(43) Date of publication of application: 04.09.2019
(73) Proprietor: Alibaba Group Holding Limited, Grand Cayman (KY)
(72) Inventor: MENG, Fei, Zhejiang 311121 (CN)
(74) Representative: Branderhorst, Matthijs Pieter Arie
(86) International application number: PCT/CN2017/106662
(87) International publication number: WO 2018/077086

(56) References cited:
- WO-A1-02/086830
- WO-A1-2015/188151
- CN-A- 1 400 819
- CN-A- 103 400 267
- CN-A- 105 337 737
- CN-A- 107 040 369
- US-A1- 2010 211 506
- US-A1- 2016 028 548
- "Chapter 13: Key Management Techniques ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 543 - 590 , 1996, XP001525013, ISBN: 978-0-8493-8523-0 Retrieved from the Internet: URL:http://www.cacr.math.uwaterloo.ca/hac/ [retrieved on 2019-09-18]

## Description

### Technical Field

The present application relates to the technical field of network communications, particularly to a data transmission method, apparatus, and system.

### Background Art

Nowadays, people are paying increasing attention to data security, particularly data security during transmission. Taking offline payments as an example, a server device may send a strategy for generation of payment codes to a client device, and the client device stores the strategy. When a user needs to use a payment code, the client device may use the strategy to generate a payment code. A merchant scans the payment code by a scanning device. The scanning device transmits information obtained from scanning to the server device for verification. After the information passes the verification, money is deducted. It can be seen that, in a process when a server device transmits the strategy to a client device, security of the channel between the client device and the server device needs to be ensured. If the strategy issued by the server device is intercepted by a third-party hacker, serious losses will be incurred by the user of the client device.

In a related art, an identical key may be preset on all client devices and server devices. A server device may use the key to encrypt information to be transmitted and transmit a ciphertext to a client device. The client device uses the key to decrypt the ciphertext. However, as all the client devices and server devices share the same key, if the key of a client device or a server device leaks, all the client devices and server devices will be at a security risk.

In another related art, a client device may generate a pair of asymmetrical keys, save a private key, and upload a public key to a server device. The server device uses the public key to encrypt information that needs to be transmitted and transmits a ciphertext to the client device. The client device uses the private key to decrypt the ciphertext. As the asymmetrical key algorithm uses a different random number during each calculation, a different asymmetrical key pair is generated during each calculation. Therefore, asymmetrical key pairs generated by different clients are different, too, avoiding the problem of a security risk for all client devices and server devices resulting from leakage of the key of a client device or a server device. Meanwhile, as the ciphertext can be decrypted only by the private key to which the public key pair corresponds, even if the public key is intercepted during transmission of the public key, the ciphertext still cannot be decrypted through the public key, thereby ensuring information security. However, an asymmetrical key needs to use a complex encryption algorithm for encryption and a complex decryption algorithm for decryption, so encryption and decryption take a long time.

WO2015/188151 describes a key agreement procedure whereby peer client devices each have a private key and a public key. Each client generates a shared secret based upon its own private key and the peer's private key. The client devices use the shared secret to generate a shared secret key pair . The shared secret public key is used by each client device to store data in a public key-value data store.

### Summary

The invention is defined in the independent claims. Particular embodiments are set out in the dependent claims.

According to a first aspect of the invention there is provided a data transmission method, wherein the method is applicable in a client and comprises:
generating, using a random number, an asymmetrical key pair comprising a first public key and a first private key for a data request, and sending the data request carrying the first public key to a server, wherein the first public key is made different from one or more other public keys carried by one or more prior data requests sent by the client, by using a different random number to generate the asymmetrical key pair;
receiving a ciphertext and a second public key sent by the server, wherein the second public key is a public key in an asymmetrical key pair obtained by the server in response to the data request, the asymmetrical key pair obtained by the server further comprises a second private key, and the ciphertext is information obtained by encrypting a seed parameter for generating an offline payment code using a shared key; the shared key is a symmetric key generated based on the second private key and the first public key using a preset key-agreement algorithm;
generating a shared key based on the first private key and the second public key using the key-agreement algorithm, and using the shared key to decrypt the ciphertext to obtain the seed parameter;
wherein the shared key generated based on the second private key and the first public key using the preset key-agreement algorithm is identical to the shared key generated based on the first private key and the second public key using the key-agreement algorithm.

According to a second aspect of the invention there is provided a data transmission method, wherein the method is applicable in a server and comprises:
receiving a data request carrying a first public key and sent by a client, wherein the data request is for requesting the server to return a seed parameter for generating an offline payment code, the first public key is a public key in an asymmetrical key pair generated by the client, and the asymmetrical key pair generated by the client further comprises a first private key, and wherein the first public key is made different from one or more other public keys carried by one or more prior data requests sent by the client;
obtaining, in response to the data request, an asymmetrical key pair comprising a second public key and a second private key, and generating a shared key based on the second private key and the first public key using a preset key-agreement algorithm, wherein the shared key is a symmetric key;
using the shared key to encrypt a seed parameter to which the data request corresponds, and sending a ciphertext obtained from encryption and the second public key to the client so that the client generates a shared key based on the first private key and the second public key using the key-agreement algorithm and uses the shared key to decrypt the ciphertext to obtain the seed parameter;
wherein the shared key generated based on the second private key and the first public key using the preset key-agreement algorithm is identical to the shared key generated based on the first private key and the second public key using the key-agreement algorithm.

According to a third aspect of the present invention there is provided data transmission method, wherein the method comprises:
a data requester terminal generating an asymmetrical key pair, using a random number, comprising a first public key and a first private key for a data request and sending a data request carrying the first public key to a data provider terminal, wherein the first public key is made different from one or more other public keys carried by one or more prior data requests sent by the data requester terminal, by using a different random number to generate the asymmetrical key pair;
the data provider terminal obtaining, in response to the data request, an asymmetrical key pair comprising a second public key and a second private key and generating a shared key based on the second private key and the first public key using a preset key-agreement algorithm, wherein the shared key is a symmetric key;
the data provider terminal using the shared key to encrypt target data to which the data request corresponds and sending a ciphertext obtained from encryption and the second public key to the data requester terminal;
the data requester terminal generating a shared symmetric key based on the first private key and the second public key using the key-agreement algorithm and using the shared key to decrypt the ciphertext to obtain the target data;
wherein the shared key generated based on the second private key and the first public key using the preset key-agreement algorithm is identical to the shared key generated based on the first private key and the second public key using the key-agreement algorithm.

According to a fourth aspect of the present invention there is provided a data transmission apparatus, wherein the apparatus comprises:
a key generation module for generating, using a random number, an asymmetrical key pair comprising a first public key and a first private key for a data request, wherein the first public key is made different from one or more other public keys carried by one or more prior data requests, by using a different random number to generate the asymmetrical key pair;
a request sending module for sending a data request carrying the first public key to a server;
an information receiving module for receiving a ciphertext and a second public key sent by the server, wherein the second public key is a public key in an asymmetrical key pair obtained by the server in response to the data request, the asymmetrical key pair obtained by the server further comprises a second private key, and the ciphertext is information obtained by encrypting a seed parameter for generating an offline payment code using a shared symmetric key; the shared key is a symmetric key generated based on the second private key and the first public key using a preset key-agreement algorithm;
a shared key generation module for generating a shared key based on the first private key and the second public key using the key-agreement algorithm;
an information decryption module for using the shared key to decrypt the ciphertext to obtain the seed parameter;
wherein the shared key generated based on the second private key and the first public key using the preset key-agreement algorithm is identical to the shared key generated based on the first private key and the second public key using the key-agreement algorithm.

According to a fifth aspect of the present invention there is provided a data transmission apparatus, wherein the apparatus comprises:
a request receiving module for receiving a data request carrying a first public key and sent by a client, wherein the data request is for requesting a server to return a seed parameter for generating an offline payment code, the first public key is a public key in an asymmetrical key pair generated by the client, and the asymmetrical key pair generated by the client further comprises a first private key, and wherein the first public key is made different from one or more other public keys carried by one or more prior data requests sent by the client;
a key obtaining module for obtaining an asymmetrical key pair comprising a second public key and a second private key in response to the data request;
a shared key generation module for generating a shared key based on the second private key and the first public key using a preset key-agreement algorithm, wherein the shared key is a symmetric key;
an information encryption module for using the shared key to encrypt a seed parameter to which the data request corresponds,
an information sending module for sending a ciphertext obtained from encryption and the second public key to the client so that the client generates a shared key based on the first private key and the second public key using the key-agreement algorithm and uses the shared key to decrypt the ciphertext to obtain the seed parameter;
wherein the shared key generated based on the second private key and the first public key using the preset key-agreement algorithm is identical to the shared key generated based on the first private key and the second public key using the key-agreement algorithm.

According to a sixth aspect of the present invention there is provided a data transmission system, wherein the system comprises a data requester device and a data provider device;
the data requester device generating an asymmetrical key pair, using a random number, comprising a first public key and a first private key and sending thea data request carrying the first public key to a data provider device, wherein the first public key is made different from one or more other public keys carried by one or more prior data requests sent by the client, by using a different random number to generate the asymmetrical key pair;
the data provider device obtaining, in response to the data request, an asymmetrical key pair comprising a second public key and a second private key, and generating a shared key based on the second private key and the first public key using a preset key-agreement algorithm, wherein the shared key is a symmetric key;
the data provider device using the shared key to encrypt target data to which the data request corresponds and sending a ciphertext obtained from encryption and the second public key to the data requester device;
the data requester device generating a shared key based on the first private key and the second public key using the key-agreement algorithm and using the shared key to decrypt the ciphertext to obtain the target data;
wherein the shared key generated based on the second private key and the first public key using the preset key-agreement algorithm is identical to the shared key generated based on the first private key and the second public key using the key-agreement algorithm.

During application of the data transmission method, apparatus, and system provided in embodiments of the present application, an asymmetrical key pair comprising a first public key and a first private key may be generated through a data requester terminal, a data request carrying the first public key is sent to a data provider terminal, an asymmetrical key pair comprising a second public key and a second private key is obtained through a data provider terminal, a shared key is generated based on the second private key and the first public key using a preset key-agreement algorithm, then the shared key is used to encrypt target data to which the data request corresponds, and lastly a ciphertext obtained from encryption and the second public key are transmitted to the data requester terminal, and the data requester terminal generates a shared key based on the first private key and the second public key using the same key-agreement algorithm. As the shared key generated based on the second private key and the first public key using the preset key-agreement algorithm is identical to the shared key generated based on the first private key and the second public key using the key-agreement algorithm, the data provider terminal may use the shared key for encryption, and the data requester terminal may use the shared key for decryption. As the key for encryption of target data and the key for decryption of target data are identical, symmetric encryption and decryption algorithms may be used to encrypt and decrypt data. As a symmetric encryption algorithm typically conducts encryption by such means as shift cipher, while an asymmetrical encryption algorithm conducts encryption by such methods as finding large prime numbers, it can be seen that the encryption process of a symmetric encryption algorithm is simpler than the encryption process of an asymmetrical encryption algorithm. Therefore, this embodiment may avoid the defect of long encryption and decryption times resulting from complex asymmetrical encryption and decryption algorithms and improve encryption and decryption efficiency. Further, as the complete key is not exposed through the entire transmission process, it is meaningless even if a public key is hijacked by a hacker, thereby ensuring data security throughout the entire transmission process.

During application of the data transmission method, apparatus, and system provided in embodiments of the present application, a first symmetric key may be obtained through a data requester terminal, a data request carrying the first symmetric key is sent to a data provider terminal, a second symmetric key is obtained through a data provider terminal, a shared key is generated based on the first symmetric key and the second symmetric key using a preset key-agreement algorithm, the shared key is used to encrypt target data to which the data request corresponds, and lastly a ciphertext obtained from encryption and the second symmetric key are transmitted to the data requester terminal, and the data requester terminal uses the same key-agreement algorithm to generate a shared key based on the first symmetric key and the second symmetric key. As the data provider terminal and the data requester terminal use an identical key-agreement algorithm, the shared key generated by the data provider terminal and that generated by data requester terminal are identical, and the data requester terminal may decrypt the ciphertext through the generated shared key, thereby obtaining the target data. It can be seen that, as the shared key is different from the first symmetric key and the second symmetric key, even if a hacker has hijacked the symmetric key, the hacker will not know what key-agreement algorithm the present application has used, so the hacker is unable to decrypt the ciphertext, thereby ensuring data security throughout the entire transmission process. Further, as the key for encryption of target data and the key for decryption of target data are identical, symmetric key encryption and decryption algorithms are used to encrypt and decrypt data to avoid long encryption and decryption times resulting from complex asymmetrical encryption and decryption algorithms, thereby improving encryption and decryption efficiency.

It should be understood that the foregoing general description and subsequent detailed description are exemplary and explanatory only and cannot limit the present application.

### Brief Description of the Drawings

The accompanying drawings here are included into and constitute a part of the Description, show embodiments conforming to the present application, and are used together with the Description to explain the principles of the present application.
FIG. 1A is a schematic diagram of an application scenario of data transmission provided by an exemplary embodiment of the present application.
FIG. 1B is a flow chart of an embodiment of a data transmission method provided by the present application.
FIG. 2 is a flow chart of another embodiment of a data transmission method provided by the present application.
FIG. 3 is a flow chart of another embodiment of a data transmission method provided by the present application.
FIG. 4 is a block diagram of an embodiment of a data transmission system provided by the present application.
FIG. 5 is a block diagram of an embodiment of a data transmission apparatus provided by the present application.
FIG. 6 is a block diagram of another embodiment of a data transmission apparatus provided by the present application.
FIG. 7 is a flow chart of another embodiment of a data transmission method provided by the present application.
FIG. 8 is a block diagram of another embodiment of a data transmission system provided by the present application.

### Detailed Description

Here, exemplary embodiments will be described in detail, with examples shown in the accompanying drawings. When the description below involves the accompanying drawings, unless otherwise indicated, the same numeral in different accompanying drawings stands for the same or similar element. The implementation manners described in the following exemplary embodiments do not represent all the implementation manners consistent with the present application. Conversely, they are only examples of the apparatus and method described in detail in the attached claims and consistent with some aspects of the present application.

The terms used in the present application are only for the purpose of describing exemplary embodiments and not intended to limit the present application. The singular forms "one", "the", and "this" used in the present application and in the attached claims also are intended to cover plural forms unless their meanings are otherwise clearly indicated in the context. It should also be understood that the term "and/or" used in the text refers to any or all possible combinations containing one or a plurality of the associated listed items.

It should be understood that although the present application may use terms such as first, second, and third to describe various kinds of information, the information should not be limited to these terms. These terms are only intended to differentiate information of the same type. For example, without departing from the scope of the present application, first information may also be referred to as second information, and similarly, second information may also be referred to as first information. Subject to the context, the term "if' used here may be interpreted as "at the time of ...", "when ....", or "in response to a determination."

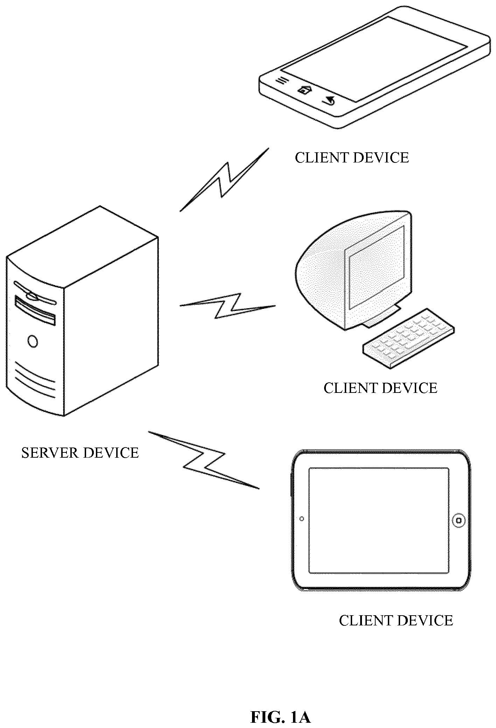

People are paying increasing attention to data security, particularly to data security during transmission. As shown in FIG. 1A, FIG. 1A is a schematic diagram of an application scenario of data transmission provided by an exemplary embodiment of the present application. In this schematic diagram, data transmission may be conducted between different client devices and server devices. For example, a client device sends a data request to a server device, and the server device returns corresponding target data according to the data request. In the transmission process, hackers might intercept the target data that is being transmitted, thereby causing losses to users.

In order to ensure data security during transmission, an identical key may be preset on all client devices and server devices. A server device may use the key to encrypt information to be transmitted and transmit a ciphertext to a client device. The client device uses the key to decrypt the ciphertext. However, as all the client devices and server devices share the same key, if the key of a client device or a server device leaks, all the client devices and server devices will be at a security risk. In order to avoid this circumstance, in another related art, a client device may generate a pair of asymmetrical keys, save a private key, and upload a public key to a server device. The server device uses the public key to encrypt information that needs to be transmitted and transmits a ciphertext to the client device. The client device uses the private key to decrypt the ciphertext. As the asymmetrical key algorithm uses a different random number during each calculation, a different asymmetrical key pair is generated during each calculation. Therefore, asymmetrical key pairs generated by different clients are different, too, avoiding the problem of a security risk for all client devices and server devices resulting from leakage of the key of a client device or a server device. Meanwhile, as the ciphertext can be decrypted only by a private key to which a public key pair corresponds, even if the public key is intercepted during transmission of the public key, the ciphertext still cannot be decrypted through the public key, thereby ensuring information security. However, an asymmetrical key needs to use a complex encryption algorithm for encryption and a complex decryption algorithm for decryption, so encryption and decryption take a long time.

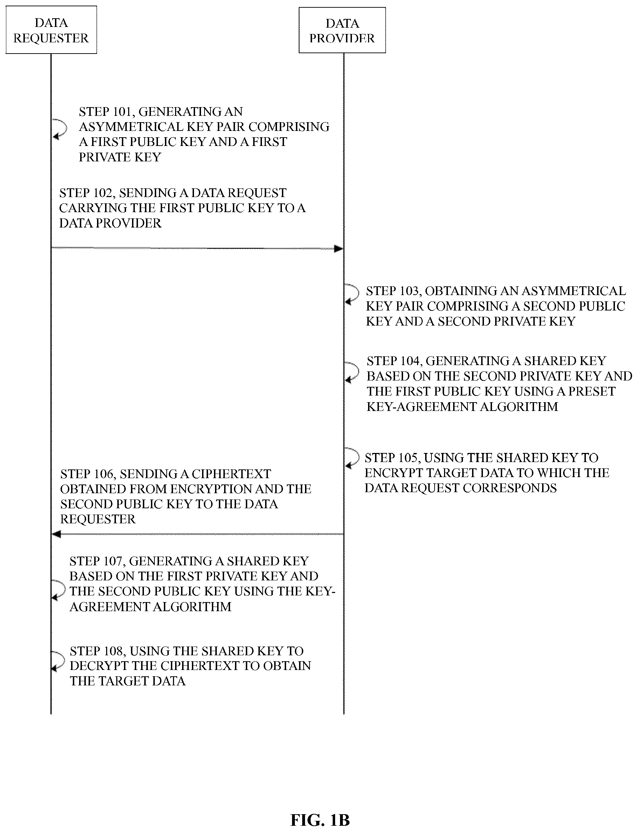

In order to avoid the information security problems in current technologies and the problem of encryption and decryption taking a long time, the present application provides a data transmission method, as shown in FIG. 1B. FIG. 1B is a flow chart of an embodiment of a data transmission method provided by the present application. This method may comprise the following step 101 ∼ step 108:
In step 101, a data requester terminal generates an asymmetrical key pair comprising a first public key and a first private key.
In step 102, the data requester terminal sends a data request carrying the first public key to a data provider terminal.
In step 103, the data provider terminal obtains an asymmetrical key pair comprising a second public key and a second private key.
In step 104, the data provider terminal generates a shared key based on the second private key and the first public key using a preset key-agreement algorithm.
In step 105, the data provider terminal uses the shared key to encrypt target data to which the data request corresponds.
In step 106, the data provider terminal sends a ciphertext obtained from encryption and the second public key to the data requester terminal.
In step 107, the data requester terminal generates a shared key based on the first private key and the second public key using the key-agreement algorithm.
In step 108, the data requester terminal uses the shared key to decrypt the ciphertext to obtain the target data.

Here, the data requester terminal is the terminal requesting data, and the data provider terminal is the terminal providing data. In an example, the data requester terminal may be a client, the data provider terminal may be a server, and the client requests the server to return target data. Taking target data that is a seed parameter for generating an offline payment code as an example, the data request may be a request for activating offline payment, the data requester terminal is a client, and the data provider terminal is a server. The client sends a request for activating offline payment to the server, and the server returns a seed parameter to the client according to the request. In another example, the server may also request data from the client, and in this way, the data requester terminal may be a server and the data provider terminal may be a client. There is no limitation to this.

From the foregoing embodiment, it can be seen that an asymmetrical key pair comprising a first public key and a first private key may be generated through a data requester terminal, a data request carrying the first public key is sent to a data provider terminal, an asymmetrical key pair comprising a second public key and a second private key is obtained through the data provider terminal, a shared key is generated based on the second private key and the first public key using a preset key-agreement algorithm, then the shared key is used to encrypt target data to which the data request corresponds, and lastly a ciphertext obtained from encryption and the second public key are transmitted to the data requester terminal, and the data requester terminal generates a shared key based on the first private key and the second public key using the same key-agreement algorithm. As the shared key generated based on the second private key and the first public key using the preset key-agreement algorithm is identical to the shared key generated based on the first private key and the second public key using the key-agreement algorithm, the data provider terminal may use the shared key for encryption, and the data requester terminal may use the shared key for decryption. As the key for encryption of target data and the key for decryption of target data are identical, symmetric encryption and decryption algorithms may be used to encrypt and decrypt data. As a symmetric encryption algorithm typically conducts encryption by such means as shift cipher, while an asymmetrical encryption algorithm conducts encryption by such method as finding large prime numbers, it can be seen that the encryption process of a symmetric encryption algorithm is simpler than the encryption process of an asymmetrical encryption algorithm. Therefore, this embodiment may avoid the defect of long encryption and decryption times resulting from complex asymmetrical encryption and decryption algorithms and improve encryption and decryption efficiency. As a different random number is used each time, a different asymmetrical key pair is generated each time. Therefore, asymmetrical key pairs generated by different clients are different, too, avoiding the problem of a security risk for all client devices and server devices resulting from leakage of the key of a client device or a server device. Further, as the complete key is not exposed throughout the entire transmission process, it is meaningless even if the public key is hijacked by a hacker, thereby ensuring data security throughout the entire transmission process.

There is no specific limitation to the generation time of an asymmetrical key pair comprising a first public key and a first private key. For example, an asymmetrical key pair may be generated prior to each data request transmission. As another example, an asymmetrical key pair may be generated at a time other than right before a data request is sent, such as when other conditions are met, so that a previously generated asymmetrical key pair can be obtained when a data request is to be sent. For example, an asymmetrical key pair may be generated at set intervals, and each newly generated asymmetrical key pair replaces the previously generated asymmetrical key pair.

In an example, a first public key and a first private key may be an asymmetrical key pair generated using a key generation algorithm. Before a data request is sent, the data requester terminal uses the key generation algorithm each time to generate an asymmetrical key pair comprising a first public key and a first private key. As the asymmetrical key pair generated by the asymmetrical key algorithm is different each time under normal conditions, this may avoid the problem of leakage of a key pair stored in a fixed manner resulting in all subsequent information encrypted using the key pair being insecure.

After a data requester terminal obtains a first public key and a first private key, the data requester terminal may send a data request carrying the first public key to a data provider terminal. Here, the data request is a request for target data.

In an example, the data requester terminal may directly include a first public key in a data request, thereby raising the speed of sending a data request.

In another example, sending a data request carrying the first public key to a data provider terminal comprises:
the data requester terminal uses a private key in a requester certificate to sign the first public key to obtain first signature information. The requester certificate is a certificate issued by a designated institution to the data requester terminal.

The data requester terminal sends a data request carrying the first public key and the first signature information to a data provider terminal.

The method further comprises the following steps: the data provider terminal verifies the first signature information based on a public key in the requester certificate and the first public key. If the verification is successful, the data provider terminal will send the ciphertext and the second public key to the data requester terminal.

Here, the designated institution typically refers to an institution that is authoritative and can issue certificates. A certificate issued by the designated institution to a data requester terminal comprises at least a private key and a public key. In other words, a requester certificate comprises a private key and a public key.

As one signing method, a data requester terminal may use a hash algorithm to perform hash operations on a first public key to obtain a first information abstract, use a private key in a requester certificate to encrypt the first information abstract to obtain first signature information, then generate a data request carrying the first public key and the first signature information based on the first signature information, and send the data request to a data provider terminal.

After the data provider terminal receives the data request, the data provider terminal may verify the first signature information based on a public key in the requester certificate and the first public key. If the verification is successful, the ciphertext and the second public key will be sent to the data provider terminal.

Here, the data provider terminal may obtain the public key in the requester certificate by the following method: the data requester terminal broadcasts it to the data provider terminal in advance, or the data requester terminal sends it to the data provider terminal while sending a data request.

As one of the verification methods, a data provider terminal may use a hash algorithm to perform hash operations on a received first public key to obtain a second information abstract, use a public key in a requester certificate to decrypt first signature information to obtain a first information abstract, and verify whether the first information abstract is consistent with the second information abstract. If consistent, it means the verification is successful. The data provider terminal can execute the operation of sending a ciphertext and a second public key to the data requester terminal only after the verification is successful.

From the foregoing embodiment, it can be seen that signing a first public key and successfully verifying the first signature information may guarantee the first public key is not tampered with, and meanwhile a requester certificate ensures the data requester terminal is a safe terminal authenticated by an authoritative institution, thereby ensuring the security of the negotiation process of a shared key.

After a data provider terminal receives a data request, the data provider terminal may obtain an asymmetrical key pair comprising a second public key and a second private key. Here, the second public key and the second private key may be a key pair generated using the key generation algorithm. It can be seen that the asymmetrical key pair comprising a first public key and a first private key and the asymmetrical key pair comprising a second public key and a second private key are generated by an identical key generation algorithm. As the key generation algorithm uses a different random number during each calculation, asymmetrical key pairs generated during calculation at different times would almost always be different. Therefore, the asymmetrical key pair generated by the data requester terminal is different from the asymmetrical key pair generated by the data provider terminal under normal circumstances.

There is no specific limitation to the generation time of an asymmetrical key pair comprising a second public key and a second private key. For example, an asymmetrical key pair may be generated each time a data request is received. As another example, an asymmetrical key pair may be generated not when a data request is received but when other conditions are met so that a previously generated asymmetrical key pair can be obtained when a data request is received. For example, an asymmetrical key pair may be generated at set intervals, and each newly generated asymmetrical key pair replaces the previously generated asymmetrical key pair.

In an example, when a data request is received, a data provider terminal uses a key generation algorithm each time to generate an asymmetrical key pair comprising a second public key and a second private key. As the asymmetrical key pair generated by the asymmetrical key algorithm is different each time under normal conditions, this may avoid the problem of leakage of a key pair stored in a fixed manner resulting in all subsequent information encrypted using the key pair being insecure.

After a data provider terminal obtains an asymmetrical key pair comprising a second public key and a second private key, the data provider terminal may generate a shared key based on the second private key and the first public key using a preset key-agreement algorithm. Subsequently, a data requester terminal will generate a shared key based on a first private key and the second public key using the key-agreement algorithm.

A key-agreement algorithm, also known as a key exchange algorithm, may be an ECDH algorithm, for example. Here, ECDH is a DH (Diffie-Hellman) key exchange algorithm based on ECC (Elliptic Curve Cryptosystems). Therefore, the two parties may negotiate to obtain a common key without sharing any secret information.

In this embodiment, the shared key generated based on the second private key and the first public key using the preset key-agreement algorithm is identical to the shared key generated based on the first private key and the second public key using the key-agreement algorithm. As one implementation manner, the key-agreement algorithms used by a data provider terminal and a data requester terminal are identical, the key generation algorithms used by the data provider terminal and the data requester terminal are also identical, and the key-agreement algorithm and the key generation algorithm meet the following condition: for any two asymmetrical key pairs generated using the key generation algorithm, when a public key of any of the two asymmetrical key pairs and a private key of the other asymmetrical key pair are selected, negotiation results obtained using the key-agreement algorithm are identical.

It can be seen that, as a first public key typically is not equal to a second public key and a first private key typically is not equal to a second private key, it is impossible to deduce a first private key from a first public key or deduce a second private key from a second public key, and a shared key negotiated from a first private key and a second public key is identical to a shared key negotiated from a second private key and a first public key, the complete key is not exposed at any time during the entire transmission process, and data security is ensured throughout the whole transmission process. Further, as the key for encryption of target data and the key for decryption of target data are identical, symmetric key encryption and decryption algorithms are used to encrypt and decrypt data to avoid long encryption and decryption times resulting from complex asymmetrical encryption and decryption algorithms, thereby improving encryption and decryption efficiency.

After a data provider terminal generates a shared key, the data provider terminal may use the shared key to encrypt target data to which the data request corresponds and send a ciphertext obtained from encryption and the second public key to the data requester terminal.

In an example, a data provider terminal may directly send a second public key to a data requester terminal to improve sending efficiency.

In another example, the method further comprises:
the data provider terminal uses a private key in a provider certificate to sign the second public key to obtain second signature information. The provider certificate is a certificate issued by a designated institution to the data provider terminal.

When the data provider terminal sends a ciphertext obtained from encryption and the second public key to the data requester terminal, the data provider terminal will further send the second signature information to the data requester terminal.

The data requester terminal verifies the second signature information based on a public key in the provider certificate and the second public key. If the verification is successful, the data requester terminal will decrypt the ciphertext.

Here, the designated institution may be an institution that can issue certificates. A certificate issued by the designated institution to a data provider terminal comprises at least a private key and a public key. In other words, a provider certificate comprises a private key and a public key.

As one signing method, a data provider terminal may use a hash algorithm to perform hash operations on a second public key to obtain a third information abstract, use a private key in a provider certificate to encrypt the third information abstract to obtain second signature information, and then send the ciphertext, second public key, and second signature information to the data requester terminal.

The data requester terminal verifies the second signature information based on a public key in the provider certificate and the second public key. If the verification is successful, the data requester terminal will decrypt the ciphertext.

Here, the data requester terminal may obtain the public key in the provider certificate by the following method: the data provider terminal broadcasts it to the data requester terminal in advance, or the data provider terminal sends it to the data requester terminal while sending a ciphertext and a second public key.

As one of the verification methods, a data requester terminal may use a hash algorithm to perform hash operations on a received second public key to obtain a fourth information abstract, use a public key in a provider certificate to decrypt the second signature information to obtain a third information abstract, and verify whether the third information abstract is consistent with the fourth information abstract. If consistent, it means the verification is successful. The data requester terminal can execute the operation of decrypting a ciphertext only after the verification is successful.

From the foregoing embodiment, it can be seen that signing a second public key and successfully verifying the second signature information may guarantee the second public key is not tampered with, and meanwhile a provider certificate ensures the data provider terminal is a safe terminal authenticated by an authoritative institution, thereby ensuring the security of the negotiation process of a shared key.

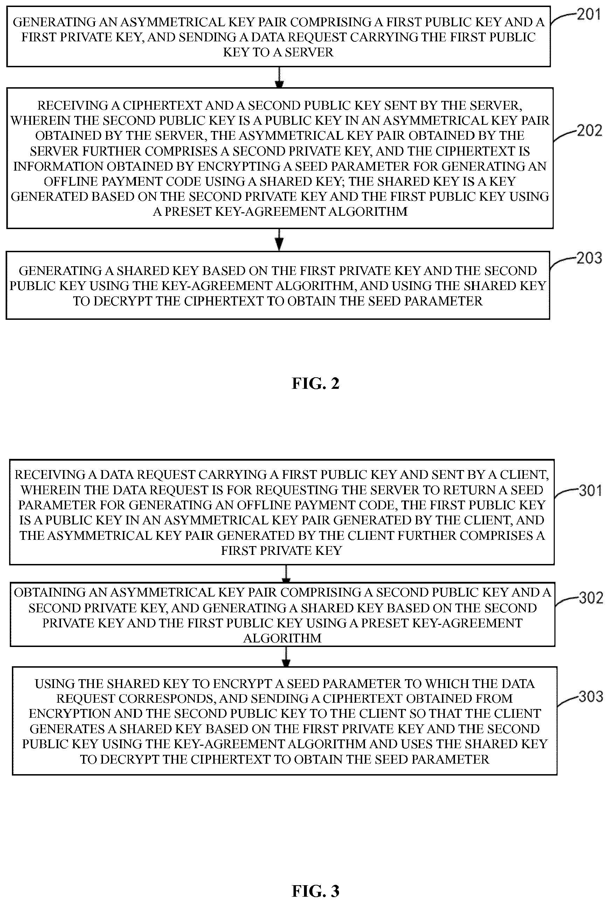

As shown in FIG. 2, FIG. 2 is a flow chart of another embodiment of a data transmission method provided by the present application. The embodiment applies the data transmission method to transmit a seed parameter. The method is applicable in a client and may comprise the following step 201-step 203:
In step 201, generating an asymmetrical key pair comprising a first public key and a first private key, and sending a data request carrying the first public key to a server.

Here, it is not necessary to set a specific limitation to the generation time of an asymmetrical key pair comprising a first public key and a first private key. For example, an asymmetrical key pair may be generated prior to each data request transmission. As another example, an asymmetrical key pair may be generated at a time other than right before a data request is sent but when other conditions are met, so that a previously generated asymmetrical key pair can be obtained when a data request is sent. For example, an asymmetrical key pair may be generated at set intervals, and each newly generated asymmetrical key pair replaces the previously generated asymmetrical key pair.

In an example, a first public key and a first private key may be an asymmetrical key pair generated using a key generation algorithm. Before a data request is sent, the client uses the key generation algorithm each time to generate an asymmetrical key pair comprising a first public key and a first private key. As the asymmetrical key pair generated by the asymmetrical key algorithm is different each time under normal conditions, this may avoid the problem of leakage of a key pair stored in a fixed manner resulting in all subsequent information encrypted using the key pair being insecure.

After a first public key and a first private key are obtained, a data request carrying the first public key may be sent to a server. Here, the data request is for requesting the server to return a seed parameter for generating an offline payment code.

In an example, a first public key may be directly carried in a data request, thereby raising the speed of sending a data request.

In another example, sending a data request carrying the first public key to a server comprises:
Using a private key in a client certificate to sign the first public key to obtain first signature information, wherein the client certificate is a certificate issued by a designated institution to the client.
Sending a data request carrying the first public key and the first signature information to a server so that the server uses a public key in the client certificate and the first public key to verify the first signature information, and sends the ciphertext and the second public key to the client if verification is successful.

Here, the designated institution may be an institution that can issue certificates. A certificate issued by the designated institution to a client comprises at least a private key and a public key. In other words, a client certificate comprises a private key and a public key. The server may obtain the public key in the client certificate by the following method: the client broadcasts it to the server in advance, or the client sends it to the server while sending a data request.

The present embodiment may use a private key in a client certificate to sign a first public key. For example, the client may use a hash algorithm to perform hash operations on the first public key to obtain a first information abstract, use a private key in the client certificate to encrypt the first information abstract to obtain first signature information, and then send a data request carrying the first public key and the first signature information to a data provider terminal.

From the foregoing embodiment, it can be seen that signing a first public key facilitates a server to verify first signature information, successful verification may guarantee the first public key is not tampered with, and meanwhile a client certificate ensures the client is a safe terminal authenticated by an authoritative institution, thereby ensuring the security of the negotiation process of a shared key.

In step 202, receiving a ciphertext and a second public key sent by the server, wherein the second public key is a public key in an asymmetrical key pair obtained by the server, the asymmetrical key pair obtained by the server further comprises a second private key, and the ciphertext is information obtained by encrypting a seed parameter for generating an offline payment code using a shared key; the shared key is a key generated based on the second private key and the first public key using a preset key-agreement algorithm. In step 203, generating a shared key based on the first private key and the second public key using the key-agreement algorithm, and using the shared key to decrypt the ciphertext and obtain the seed parameter.

Here, a key-agreement algorithm, also known as a key exchange algorithm, may be an ECDH algorithm, for example, wherein ECDH is a DH (Diffie-Hellman) key exchange algorithm based on ECC (Elliptic Curve Cryptosystems). Therefore, the two parties may negotiate a common key without sharing any secret information.

In this embodiment, the shared key generated based on the second private key and the first public key using the preset key-agreement algorithm is identical to the shared key generated based on the first private key and the second public key using the key-agreement algorithm. As one implementation manner, the key-agreement algorithms used by a data provider terminal and a data requester terminal are identical, the key generation algorithms used by the data provider terminal and the data requester terminal are also identical, and the key-agreement algorithm and the key generation algorithm meet the following condition: for any two asymmetrical key pairs generated using the key generation algorithm, when a public key of any of the two asymmetrical key pairs and a private key of the other asymmetrical key pair are selected, negotiation results obtained using the key-agreement algorithm are identical.

It can be seen that, as a first public key typically is not equal to a second public key and a first private key typically is not equal to a second private key, it is impossible to deduce a first private key from a first public key or deduce a second private key from a second public key, and the shared key negotiated from a first private key and a second public key is identical to the shared key negotiated from a second private key and a first public key, the complete key is not exposed at any time during the entire transmission process, and data security is ensured throughout the whole transmission process. Further, as a key for encryption of a seed parameter and a key for decryption of a seed parameter are identical, symmetric key encryption and decryption algorithms are used to encrypt and decrypt a seed parameter to avoid long encryption and decryption times resulting from complex asymmetrical encryption and decryption algorithms, thereby improving encryption and decryption efficiency.

In an optional implementation manner, a client may be in an electronic device, particularly in a wearable device. As a wearable device often has configurations corresponding to relatively low performance, when this solution is used in a wearable device, symmetric encryption and decryption algorithms are not very demanding on resources. While ensuring transmission security, this solution greatly improves performance and improves the efficiency of the whole transmission process. Further, a wearable device may comprise a smart bracelet. Implementing the embodiment through a smart bracelet may not only guarantee the transmission security of a seed parameter but also ensure the efficiency of the whole transmission process.

In an example, the method in the embodiment may be executed through a secure element (SE), thereby enabling generation of an asymmetrical key, generation of a shared key, and decryption of a ciphertext to be executed in the SE. Further, a seed parameter may also be stored in an SE. As the SE has an anti-cracking function, the SE may provide a seed parameter with a very high security level.

Further, a seed parameter may be stored in an SE, and meanwhile access authority of the SE may be set, too, with payment code generation being controlled through fingerprint recognition, pulse recognition, face recognition, or other verification methods, thereby providing the whole payment code with a very high security level.

As shown in FIG. 3, FIG. 3 is a flow chart of another embodiment of a data transmission method provided by the present application. The embodiment uses the data transmission method to transmit a seed parameter. When the method is used in a server, it may comprise the following step 301 ∼ step 303:
In step 301, receiving a data request carrying a first public key and sent by a client, wherein the data request is for requesting the server to return a seed parameter for generating an offline payment code, the first public key is a public key in an asymmetrical key pair generated by the client, and the asymmetrical key pair generated by the client further comprises a first private key.

Here, when a data request is received, if the data request only carries a first public key, step 302 may be executed directly; if the data request carries a first public key and first signature information, the first signature information is verified based on a public key in a client certificate and the first public key, and step 302 is executed only after the verification is successful.

Here, the server may obtain the public key in the client certificate by the following method: the client broadcasts it to the server in advance, or the client sends it to the server while sending a data request.

As one of the verification methods, a server may use a hash algorithm to perform hash operations on a received first public key to obtain a second information abstract, use a public key in a client certificate to decrypt the first signature information to obtain a first information abstract, and verify whether the first information abstract is consistent with the second information abstract. If consistent, it means the verification is successful. The server subsequently will return a ciphertext and a second key to the client.

In step 302, obtaining an asymmetrical key pair comprising a second public key and a second private key, and generating a shared key based on the second private key and the first public key using a preset key-agreement algorithm.

In step 303, using the shared key to encrypt a seed parameter to which the data request corresponds, and sending a ciphertext obtained from encryption and the second public key to the client so that the client generates a shared key based on the first private key and the second public key using the key-agreement algorithm and uses the shared key to decrypt the ciphertext and obtain the seed parameter

Here, it is not necessary to set specific limitations to generation time of an asymmetrical key pair comprising a second public key and a second private key. For example, an asymmetrical key pair may be generated each time a data request is received. As another example, an asymmetrical key pair may be generated at a time other than when a data request is received but when other conditions are met so that a previously generated asymmetrical key pair can be obtained when a data request is received. For example, an asymmetrical key pair may be generated at set intervals, and each newly generated asymmetrical key pair replaces the previously generated asymmetrical key pair.

In an example, the second public key and the second private key may be a key pair generated using the key generation algorithm. For example, when a data request is received, a server uses the key generation algorithm each time to generate an asymmetrical key pair comprising a second public key and a second private key. As the asymmetrical key pair generated by the asymmetrical key algorithm is different each time under normal conditions, this may avoid the problem of leakage of a key pair stored in a fixed manner resulting in all subsequent information encrypted using the key pair being insecure.

Here, the asymmetrical key pair comprising a first public key and a first private key and the asymmetrical key pair comprising a second public key and a second private key are generated by an identical key generation algorithm. As the key generation algorithm uses a different random number during each calculation, the asymmetrical key pairs generated during calculation at different times would seem different. Therefore, the asymmetrical key pair generated by the client is different from the asymmetrical key pair generated by the server under normal circumstances.

After a server obtains a second public key and a second private key, the server may generate a shared key based on the second private key and the first public key using a preset key-agreement algorithm.

A key-agreement algorithm, also known as a key exchange algorithm, may be an ECDH algorithm, for example, wherein ECDH is a DH (Diffie-Hellman) key exchange algorithm based on ECC (Elliptic Curve Cryptosystems). Therefore, the two parties may negotiate a common key without sharing any secret information.

In this embodiment, the shared key generated based on the second private key and the first public key using the preset key-agreement algorithm is identical to the shared key generated based on the first private key and the second public key using the key-agreement algorithm. As one implementation manner, the key-agreement algorithms used by a data provider terminal and a data requester terminal are identical, the key generation algorithms used by the data provider terminal and the data requester terminal are also identical, and the key-agreement algorithm and the key generation algorithm meet the following condition: for any two asymmetrical key pairs generated using the key generation algorithm, when a public key of any of the two asymmetrical key pairs and a private key of the other asymmetrical key pair are selected, negotiation results obtained using the key-agreement algorithm are identical.

After a server obtains a shared key, the server may use the shared key to encrypt a seed parameter to which the data request corresponds and send a ciphertext obtained from encryption and the second public key to a client. The seed parameter is a seed parameter for generating an offline payment code. After the server receives a data request, the server may obtain a seed parameter according to the data request. The seed parameters to which clients correspond may be the same or different, subject to actual requirements.

As for the sending of a second public key, in one example, the second public key may be directly sent to a client to raise sending speed.

In another example, the method further comprises:
using a private key in a server certificate to sign the second public key to obtain second signature information. The server certificate is a certificate issued by a designated institution to the server.

While sending a ciphertext obtained from encryption and the second public key to the client, also sending the second signature information to the client, so that the client verifies the second signature information based on a public key in the server certificate and the second public key. If the verification is successful, the client will decrypt the ciphertext.

Here, the designated institution may be an institution that can issue certificates. A certificate issued by the designated institution to a server comprises at least a private key and a public key. In other words, a server certificate comprises a private key and a public key. The client may obtain the public key in the server certificate by the following method: the server broadcasts it to the client in advance, or the server sends it to the client while sending a ciphertext and a second public key.

As one signing method, a server may use a hash algorithm to perform hash operations on a second public key to obtain a third information abstract, use a private key in a server certificate to encrypt the third information abstract to obtain second signature information, and then send the ciphertext, the second public key, and the second signature information to the client.

The client may verify the second signature information based on the public key in the server certificate and the second public key. If successful, the client will decrypt the ciphertext.

As one of the verification methods, a client may use a hash algorithm to perform hash operations on a second public key to obtain a fourth information abstract, use a public key in a server certificate to decrypt second signature information to obtain a third information abstract, and verify whether the third information abstract is consistent with the fourth information abstract. If consistent, it means the verification is successful. The client can execute the operation of decrypting a ciphertext only after successful verification.

From the foregoing embodiment, it can be seen that signing a second public key and successfully verifying second signature information may guarantee the second public key is not tampered with, and meanwhile a server certificate ensures the server is a safe end authenticated by an authoritative institution, thereby ensuring the security of the negotiation process of a shared key.

Corresponding to an embodiment of a data transmission method provided by the present application, the present application further provides embodiments of a data transmission apparatus and a data transmission system.

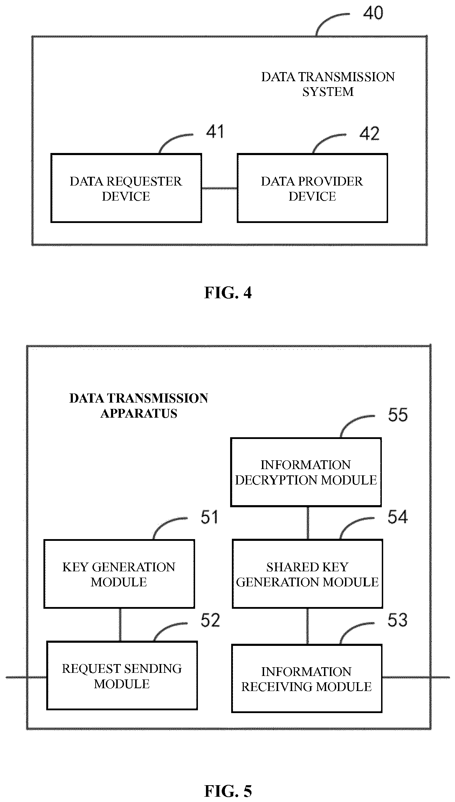

Refer to FIG. 4. It is a block diagram of an embodiment of a data transmission system provided by the present application:
The system 40 comprises a data requester device 41 and a data provider device 42.

The data requester device 41 generates an asymmetrical key pair comprising a first public key and a first private key and sends a data request carrying the first public key to the data provider device 42.

The data provider device 42 obtains an asymmetrical key pair comprising a second public key and a second private key and generates a shared key based on the second private key and the first public key using a preset key-agreement algorithm.

The data provider device 42 uses the shared key to encrypt target data to which the data request corresponds and sends a ciphertext obtained from encryption and the second public key to the data requester device 41.

The data requester device 41 generates a shared key based on the first private key and the second public key using the key-agreement algorithm and uses the shared key to decrypt the ciphertext to obtain the target data.

Here, the shared key generated based on the second private key and the first public key using the preset key-agreement algorithm is identical to the shared key generated based on the first private key and the second public key using the key-agreement algorithm.

In an optional implementation manner, the data requester device 41 uses a private key in a requester certificate to sign the first public key to obtain first signature information and sends a data request carrying the first public key and the first signature information to a data provider device 42. The requester certificate is a certificate issued by a designated institution to the data requester device.

Before the data provider device 42 returns a ciphertext and a second public key to the data requester device 41, the data provider device 42 verifies the first signature information based on a public key in the requester certificate and the first public key and determines the verification is successful.

In an optional implementation manner, the data provider device 42 uses a private key in a provider certificate to sign the second public key to obtain second signature information. When a ciphertext obtained from encryption and the second public key are sent to the data requester device 41, the data provider device 42 sends the second signature information to the data requester device 41, too; the provider certificate is a certificate issued by a designated institution to the data provider device 42.

Before the data requester device 41 decrypts a ciphertext, the data requester device 41 verifies the second signature information based on a public key in the provider certificate and the second public key and determines the verification is successful.

Refer to FIG. 5. It is a block diagram of an embodiment of a data transmission apparatus provided by the present application:
The apparatus comprises: a key generation module 51, a request sending module 52, an information receiving module 53, a shared key generation module 54, and an information decryption module 55.

The key generation module 51 is for generating an asymmetrical key pair comprising a first public key and a first private key.

The request sending module 52 is for sending a data request carrying the first public key to a server.

The information receiving module 53 is for receiving a ciphertext and a second public key sent by the server, wherein the second public key is a public key in an asymmetrical key pair obtained by the server, the asymmetrical key pair obtained by the server further comprises a second private key, and the ciphertext is information obtained by encrypting a seed parameter for generating an offline payment code using a shared key; the shared key is a key generated based on the second private key and the first public key using a preset key-agreement algorithm.

The shared key generation module 54 is for generating a shared key based on the first private key and the second public key using the key-agreement algorithm.

The information decryption module 55 is for using the shared key to decrypt the ciphertext and obtain the seed parameter.

Here, the shared key generated based on the second private key and the first public key using the preset key-agreement algorithm is identical to the shared key generated based on the first private key and the second public key using the key-agreement algorithm.

In an optional implementation manner, the request sending module 52 is for:
using a private key in a client certificate to sign the first public key to obtain first signature information, wherein the client certificate is a certificate issued by a designated institution to the client.
sending a data request carrying the first public key and the first signature information to a server so that the server uses a public key in the client certificate and the first public key to verify the first signature information, and sends the ciphertext and the second public key to the client if verification is successful.

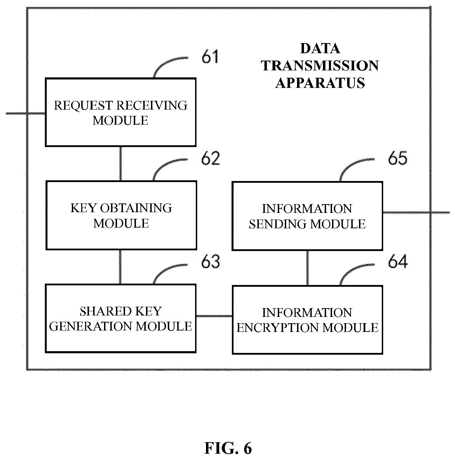

Refer to FIG. 6. It is a block diagram of another embodiment of a data transmission apparatus provided by the present application:
The apparatus comprises: a request receiving module 61, a key obtaining module 62, a shared key generation module 63, an information encryption module 64, and an information sending module 65.

Here, the request receiving module 61 is for receiving a data request carrying a first public key and sent by a client, wherein the data request is for requesting a server to return a seed parameter for generating an offline payment code, the first public key is a public key in an asymmetrical key pair generated by the client, and the asymmetrical key pair generated by the client further comprises a first private key.

The key obtaining module 62 is for obtaining an asymmetrical key pair comprising a second public key and a second private key.

The shared key generation module 63 is for generating a shared key based on the second private key and the first public key using a preset key-agreement algorithm.

The information encryption module 64 is for using the shared key to encrypt a seed parameter to which the data request corresponds.

The information sending module 65 is for sending a ciphertext obtained from encryption and the second public key to the client so that the client generates a shared key based on the first private key and the second public key using the key-agreement algorithm and uses the shared key to decrypt the ciphertext to obtain the seed parameter.

Here, the shared key generated based on the second private key and the first public key using the preset key-agreement algorithm is identical to the shared key generated based on the first private key and the second public key using the key-agreement algorithm.

In an optional implementation manner, the apparatus 60 further comprises (not shown in FIG. 6):
a signature module for using a private key in a server certificate to sign the second public key to obtain second signature information, wherein the server certificate is a certificate issued by a designated institution to the server.

The information sending module 65 is further used to send the second signature information to the client when sending a ciphertext obtained from encryption and the second public key to the client so that the client verifies the second signature information based on a public key in the server certificate and the second public key. After the verification is successful, the client decrypts the ciphertext.

Based on this, the present application further provides a wearable device. The wearable device comprises an SE chip, which is for:
generating an asymmetrical key pair comprising a first public key and a first private key and sending a data request carrying the first public key to a server.
receiving a ciphertext and a second public key sent by the server, wherein the second public key is a public key in an asymmetrical key pair obtained by the server, the asymmetrical key pair obtained by the server further comprises a second private key, and the ciphertext is information obtained by encrypting a seed parameter for generating an offline payment code using a shared key; the shared key is a key generated based on the second private key and the first public key using a preset key-agreement algorithm.
generating a shared key based on the first private key and the second public key using the key-agreement algorithm, and using the shared key to decrypt the ciphertext and obtain the seed parameter.

Here, the shared key generated based on the second private key and the first public key using the preset key-agreement algorithm is identical to the shared key generated based on the first private key and the second public key using the key-agreement algorithm.

From the foregoing embodiment, it can be seen that through configuration of an SE in a wearable device, generation of an asymmetrical key pair, generation of a shared key, storage of target data, and decryption of a ciphertext are conducted in the SE. Further, as the SE has an anti-cracking function, the SE may provide the target data with a very high security level.

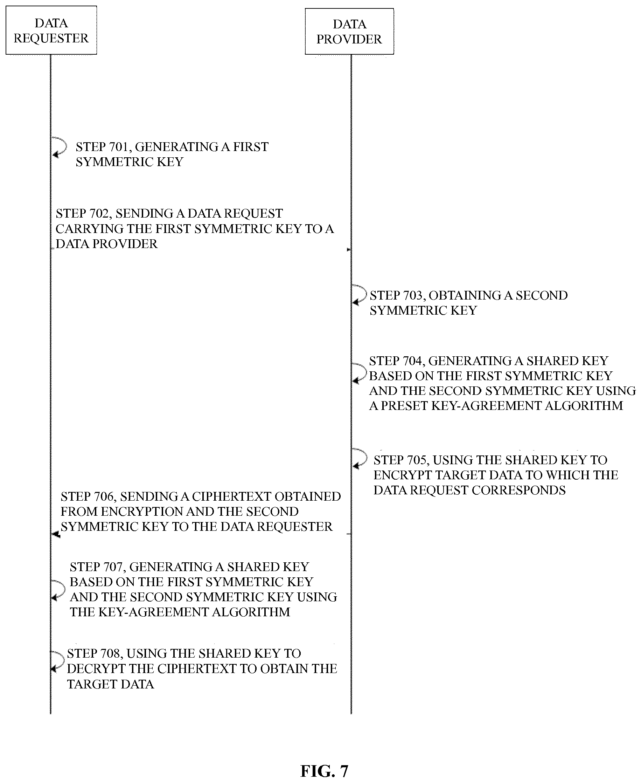

In order to avoid the problems of information security and prolonged encryption and decryption in current technologies, the present application further provides an alternative data transmission method, as shown in FIG. 7. FIG. 7 is a flow chart of another embodiment of a data transmission method provided by the present application. The method may comprise the following step 701 ∼ step 708:
In step 701, a data requester terminal generates a first symmetric key.
In step 702, the data requester terminal sends a data request carrying the first symmetric key to a data provider terminal.
In step 703, the data provider terminal obtains a second symmetric key, which is different from the first symmetric key.
In step 704, the data provider terminal generates a shared key based on the first symmetric key and the second symmetric key using a preset key-agreement algorithm.
In step 705, the data provider terminal uses the shared key to encrypt target data to which the data request corresponds.
In step 706, the data provider terminal sends a ciphertext obtained from encryption and the second symmetric key to the data requester terminal.
In step 707, the data requester terminal generates a shared key based on the first symmetric key and the second symmetric key using the key-agreement algorithm.
In step 708, the data requester terminal uses the shared key to decrypt the ciphertext to obtain the target data.

From the foregoing embodiment, it can be seen that a first symmetric key may be obtained through a data requester terminal, a data request carrying the first symmetric key is sent to a data provider terminal, a second symmetric key is obtained through a data provider terminal, a shared key is generated based on the first symmetric key and the second symmetric key using a preset key-agreement algorithm, then the shared key is used to encrypt target data to which the data request corresponds, and lastly a ciphertext obtained from encryption and the second symmetric key are transmitted to the data requester terminal, and the data requester terminal uses the same key-agreement algorithm to generate a shared key based on the first symmetric key and the second symmetric key. As a data provider terminal and a data requester terminal use an identical key-agreement algorithm, the shared key generated by the data provider terminal and that generated by the data requester terminal are identical, and the data requester terminal may decrypt the ciphertext through the generated shared key, thereby obtaining the target data. It can be seen that, as the asymmetrical key algorithm uses a different random number during each calculation, a different asymmetrical key pair is generated during each calculation. Therefore, asymmetrical key pairs generated by different clients are different, too, avoiding the problem of a security risk for all client devices and server devices resulting from leakage of the key of a client device or a server device. Meanwhile as the shared key is different from the first symmetric key and the second symmetric key, even if a hacker has hijacked the symmetric key, the hacker will not know what key-agreement algorithm the present application has used, so the hacker is unable to decrypt the ciphertext, thereby ensuring data security throughout the entire transmission process. Further, as the key for encryption of target data and the key for decryption of target data are identical, symmetric key encryption and decryption algorithms are used to encrypt and decrypt data to avoid long encryption and decryption times resulting from complex asymmetrical encryption and decryption algorithms, thereby improving encryption and decryption efficiency.

Here, the key generation algorithm generating a first symmetric key and the key generation algorithm generating a second symmetric key may be the same or different. No specific limitation is set. As the symmetric key generated by the key generation algorithm is different each time, the second symmetric key is different from the first symmetric key.

After the data requester terminal obtains a first symmetric key, it may generate a data request carrying a first symmetric key based on the first symmetric key. Here, the data request is used to request target data. After the data request is generated, it may be sent to a data provider terminal.

In an example, the data requester terminal may use a data request to directly carry a first symmetric key, thereby raising the speed of sending a data request.

In another example, sending a data request carrying the first symmetric key to a data provider terminal comprises:
the data requester terminal uses a private key in a requester certificate to sign the first symmetric key to obtain first signature information. The requester certificate is a certificate issued by a designated institution to the data requester terminal.

The data requester terminal sends a data request carrying the first symmetric key and the first signature information to a data provider terminal.

Here, the designated institution may be an institution that can issue certificates. A certificate issued by the designated institution to a data requester terminal comprises at least a private key and a public key.

After a data provider terminal receives a data request, the data provider terminal may verify the first signature information based on a public key in the requester certificate and the first symmetric key. After the verification is successful, the data provider terminal will execute the operation of returning a ciphertext and a second symmetric key to the data requester terminal.

From the foregoing embodiment, it can be seen that signing a first symmetric key and successfully verifying the first signature information may guarantee the first symmetric key is not tampered with, and meanwhile a requester certificate ensures the data requester terminal is a safe terminal authenticated by an authoritative institution, thereby ensuring the security of the negotiation process of a shared key.

After a data provider terminal receives a data request, the data provider terminal may obtain a second symmetric key. After the data provider terminal obtains the second symmetric key, the data provider terminal may generate a shared key based on the first symmetric key and the second symmetric key using a preset key-agreement algorithm.

Here, a key-agreement algorithm, also known as a key exchange algorithm, may be an ECDH algorithm, for example, wherein ECDH is a DH (Diffie-Hellman) key exchange algorithm based on ECC (Elliptic Curve Cryptosystems). Therefore, the two parties may negotiate a common key without sharing any secret information.

A data provider terminal may use the shared key to encrypt target data to which the data request corresponds and send a ciphertext obtained from encryption and the second symmetric key to the data requester terminal.

In an example, a data provider terminal may directly send a second symmetric key to a data requester terminal to improve sending efficiency.

In another example, the data provider terminal uses a private key in a provider certificate to sign the second symmetric key to obtain second signature information. The provider certificate is a certificate issued by a designated institution to the data provider terminal.

When the data provider terminal sends a ciphertext obtained from encryption and the second symmetric key to the data requester terminal, the data provider terminal will further send the second signature information to the data requester terminal.

Here, the designated institution may be an institution that can issue certificates. A certificate issued by the designated institution to a data provider terminal comprises at least a private key and a public key. In other words, a provider certificate comprises a private key and a public key.

The data requester terminal verifies the second signature information based on a public key in the provider certificate and the second symmetric key. After the verification is successful, the data requester terminal executes the step of decrypting a ciphertext.

From the foregoing embodiment, it can be seen that signing a second symmetric key and successfully verifying second signature information may guarantee the second symmetric key is not tampered with, and meanwhile a provider certificate ensures the data provider terminal is a safe terminal authenticated by an authoritative institution, thereby ensuring the security of the negotiation process of a shared key.

Corresponding to the embodiment of a data transmission method provided by the present application, the present application further provides an embodiment of a data transmission system.

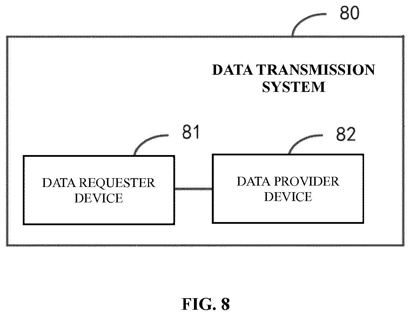

Refer to FIG. 8. It is a block diagram of another embodiment of a data transmission system provided by the present application:
The system 80 comprises a data requester device 81 and a data provider device 82.

The data requester device 81 generates a first symmetric key and sends a data request carrying the first symmetric key to the data provider device 82.

The data provider device 82 obtains a second symmetric key and generates a shared key based on the first symmetric key and the second symmetric key using a preset key-agreement algorithm, the second symmetric key being different from the first symmetric key.

The data provider device 82 uses the shared key to encrypt target data to which the data request corresponds and sends a ciphertext obtained from encryption and the second symmetric key to the data requester device 81.

The data requester device 81 generates a shared key based on the first symmetric key and the second symmetric key using the key-agreement algorithm and uses the shared key to decrypt the ciphertext to obtain the target data.

The processes of achieving the functions and effects of every module in the foregoing apparatus are detailed in the achieving processes of corresponding steps in the foregoing method, so no unnecessary details will be repeated.

The apparatus embodiment basically corresponds to the method embodiment, so for relevant parts of the apparatus, please refer to the corresponding parts of the method embodiment. The apparatus embodiment described above is exemplary only, its units described as separate components may or may not be physically separate, and the components displayed as units may or may not be physical units, i.e., they may be located in the same place or distributed on a plurality of network units. Some or all of the modules may be selected according to the actual need to achieve the objectives of the solution of the present application. Those of ordinary skill in the art can understand and implement it without creative effort.

After considering the Description and practicing the invention applied for here, those skilled in the art may easily think of other embodiments of the present application. The present application is intended to cover any modification, use, or adaptive change of the present application. These modifications, uses, or adaptive changes follow the general principle of the present application and include the common general knowledge or conventional technical means in the technical field not applied for by the present application. The Description and embodiments are exemplary only. The real scope of the present application are stated by the following Claims.

It should be understood that the present application is not limited to the precise structure described above and shown in the accompanying drawings, and various modifications and changes may be made without departing from its scope. The scope of the present application is limited by the attached Claims.

## Claims

1. A method for secure communication of a seed parameter for generating an offline payment code; wherein the method is applicable in a client and comprises:
generating (201), using a random number, an asymmetrical key pair comprising a first public key and a first private key for a data request, and sending (101) the data request carrying the first public key to a server, wherein the first public key is made different from one or more other public keys carried by one or more prior data requests sent by the client, by using a different random number for each of the one or more data requests sent by the client to generate a different asymmetrical key pair for each of the one or more data requests sent by the client; then
receiving (202) a ciphertext and a second public key sent by the server, wherein the second public key is a public key in an asymmetrical key pair obtained by the server in response to the data request sent by the client; wherein the asymmetrical key pair obtained by the server in response to the data request sent by the client, is also different for each of the one or more data requests sent by the client, and further comprises a second private key; and wherein
the ciphertext is information obtained by encrypting the seed parameter for generating an offline payment code using a shared key; the shared key is a symmetric key generated based on the second private key and the first public key using a preset key-agreement algorithm; then
generating (203) a shared key based on the first private key and the second public key using the key-agreement algorithm, and using the shared key based on the first private key and the second public key using the key-agreement algorithm to decrypt the ciphertext to obtain the seed parameter;
wherein the shared key generated based on the second private key and the first public key using the preset key-agreement algorithm is identical to the shared key generated based on the first private key and the second public key using the key-agreement algorithm and is different for each of the one or more data requests sent by the client.

2. The method as described in claim 1, wherein the sending a data request carrying the first public key to a server comprises:
using a private key in a client certificate to sign the first public key to obtain first signature information, wherein the client certificate is a certificate issued by a designated institution to the client;
sending a data request carrying the first public key and the first signature information to a server so that the server uses a public key in the client certificate and the first public key to verify the first signature information, and sends the ciphertext and the second public key to the client if verification is successful.

3. The method as described in claim 1 or 2, wherein the client is located in a wearable device.

4. The method as described in claim 3, wherein the wearable device comprises a smart bracelet.

5. A method for secure transmission of a seed parameter for generating an offline payment code; wherein the method is applicable in a server and comprises:
receiving (301) a data request carrying a first public key and sent by a client, wherein the received data request is for requesting the server to return the seed parameter for generating an offline payment code, the first public key is a public key in an asymmetrical key pair generated by the client, and the asymmetrical key pair generated by the client further comprises a first private key, and wherein the first public key is made different from each of one or more other public keys carried by one or more prior data requests sent by the client;
obtaining (302), in response to the received data request, an asymmetrical key pair comprising a second public key and a second private key; wherein the obtained asymmetrical key pair is different for each of the one or more data requests sent by the client; then
generating a shared key based on the second private key and the first public key using a preset key-agreement algorithm, wherein the generated shared key is a symmetric key; then
using (303) the generated shared key to encrypt the seed parameter to which the data request corresponds for obtaining a ciphertext, and sending the obtained ciphertext and the second public key to the client so that the client generates a shared key based on the first private key and the second public key using the key-agreement algorithm and uses the shared key generated based on the first private key and the second public key using the key-agreement algorithm to decrypt the ciphertext to obtain the seed parameter;
wherein the shared key generated based on the second private key and the first public key using the preset key-agreement algorithm is identical to the shared key generated based on the first private key and the second public key using the key-agreement algorithm and is different for each of the one or more data requests sent by the client.

6. The method as described in claim 5, wherein the method further comprises:
using a private key in a server certificate to sign the second public key to obtain second signature information, wherein the server certificate is a certificate issued by a designated 35490678-1 institution to the server;
while sending the ciphertext obtained from encryption and the second public key to the client, also sending the second signature information to the client, so that the client verifies the second signature information based on a public key in the server certificate and the second public key, and decrypts the ciphertext if verification is successful.

7. A method for secure communication of a seed parameter for generating an offline payment code; wherein the method comprises:
a data requester terminal generating (101) an asymmetrical key pair, using a random number, comprising a first public key and a first private key for a data request and sending (102) the data request carrying the first public key to a data provider terminal, wherein the first public key is made different from one or more other public keys carried by one or more prior data requests sent by the data requester terminal, by using a different random number for each of the one or more data requests sent by the data requester terminal to generate a different asymmetrical key pair for each of the one or more data requests sent by the data requester terminal; then
the data provider terminal obtaining (103), in response to the data request sent by the data requester terminal, an asymmetrical key pair comprising a second public key and a second private key; wherein the obtained asymmetrical key pair is different for each of the one or more data requests sent by the data requester terminal, and generating (104) by the data provider terminal (103) a shared key based on the second private key and the first public key using a preset key-agreement algorithm, wherein the generated shared key is a symmetric key; then
the data provider terminal using (106) the generated shared key to encrypt the seed parameter for generating an offline payment code to which the data request corresponds to obtain a ciphertext; and sending (106) the obtained ciphertext and the second public key to the data requester terminal;
the data requester terminal generating (107) a shared symmetric key based on the first private key and the second public key using the key-agreement algorithm and using (108) the shared key generated based on the first private key and the second public key using the key-agreement algorithm to decrypt the ciphertext to obtain the seed parameter for generating an offline payment code;
wherein the shared key generated based on the second private key and the first public key using the preset key-agreement algorithm is identical to the shared key generated based on the first private key and the second public key using the key-agreement algorithm and is different for each of the one or more data requests sent by the data requester terminal.

8. The method as described in claim 7, wherein the sending a data request carrying the first public key to a data provider terminal comprises:
the data requester terminal using a private key in a requester certificate to sign the first public key to obtain first signature information, wherein the requester certificate is a certificate issued by a designated institution to the data requester terminal;
the data requester terminal sending a data request carrying the first public key and the first signature information to the data provider terminal;
the method further comprising: the data provider terminal verifying the first signature information based on a public key in the requester certificate and the first public key, and the data provider terminal sending the ciphertext and the second public key to the data requester terminal if verification is successful.

9. The method as described in claim 7, wherein the method further comprises:
the data provider terminal using a private key in a provider certificate to sign the second public key to obtain second signature information, wherein the provider certificate is a certificate issued by a designated institution to the data provider terminal;
when the data provider terminal sends the ciphertext obtained from encryption and the second public key to the data requester terminal, the data provider terminal further sending the second signature information to the data requester terminal;
the data requester terminal verifying the second signature information based on a public key in the provider certificate and the second public key, and the data requester terminal decrypting the ciphertext if verification is successful.

10. A client apparatus for secure communication of a seed parameter for generating an offline payment code, the client apparatus comprising:
a key generation module (51) configured to generate, using a random number, an asymmetrical key pair comprising a first public key and a first private key for a data request, wherein the first public key is made different from one or more other public keys carried by one or more prior data requests, by using a different random number for each of the one or more data requests to generate a different asymmetrical key pair for each of the one or more data requests;
a request sending module (52) configured to send the data request carrying the first public key to a server;
an information receiving module (53) configured to receive a ciphertext and a second public key sent by the server, wherein the second public key is a public key in an asymmetrical key pair obtained by the server in response to the data request sent by the request sending module (52); wherein the asymmetrical key pair obtained by the server is different for each of the one or more data requests;
wherein the asymmetrical key pair obtained by the server further comprises a second private key; and wherein the ciphertext received by the information receiving module (53) is obtained by the server by encrypting the seed parameter for generating an offline payment code using a shared symmetric key; wherein the shared key is a symmetric key generated by the server based on the second private key and the first public key using a preset key-agreement algorithm;
a shared key generation module (54) for generating a shared key based on the first private key and the second public key using the key-agreement algorithm;
an information decryption module (55) for using the shared key generated by the shared key generation module based on the first private key and the second public key to decrypt the ciphertext received from the server by the information receiving module (53) to obtain the seed parameter;
wherein the shared key generated based on the second private key and the first public key using the preset key-agreement algorithm is identical to the shared key generated based on the first private key and the second public key using the key-agreement algorithm and different for each of the one or more data requests.

11. A server apparatus, for secure communication of a seed parameter for generating an offline payment code; the server apparatus comprising:
a request receiving module (61) configured to receive a data request carrying a first public key which is sent by a client, wherein the received data request is for requesting the server to return to the client a the seed parameter for generating an offline payment code, the first public key carried within the data request received by the request receiving module is a public key in an asymmetrical key pair generated by the client, wherein the asymmetrical key pair generated by the client further comprises a first private key, and wherein the first public key carried within the data request received by the request receiving module is made different from each of one or more other public keys carried by one or more prior data requests sent by the client;
a key obtaining module (62) configured to obtain an asymmetrical key pair comprising a second public key and a second private key in response to the data request received by the request receiving module (61); wherein the obtained asymmetrical key pair is different for each of the one or more data requests sent by the client;
a shared key generation module (63) configured to generate a shared key based on the second private key and the first public key using a preset key-agreement algorithm, wherein the generated shared key is a symmetric key;
an information encryption module (64) configured to use the shared key generated by the shared key generation module (63) to encrypt a seed parameter for generating an offline payment code to which the received data request corresponds, for obtaining a ciphertext;
an information sending module (65) configured to send the obtained ciphertext and the second public key to the client so that the client generates a shared key based on the first private key and the second public key using the key-agreement algorithm and uses the shared key to decrypt the ciphertext sent by the information sending module (65) for obtaining the seed parameter for generating an offline payment code;
wherein the shared key generated based on the second private key and the first public key using the preset key-agreement algorithm is identical to the shared key generated based on the first private key and the second public key using the key-agreement algorithm and different for each of the one or more data requests sent by the client.

12. A data communication system for secure communication of a seed parameter for generating an offline payment code; wherein the data transmission system comprising the client apparatus of claim 10 and the server apparatus of claim 11.

## Patentansprüche

1. Verfahren zur sicheren Übermittlung eines Seed-Parameters zum Erzeugen eines Offline-Zahlungscodes ;
wobei das Verfahren in einem Client anwendbar ist und umfasst:
unter Verwendung einer Zufallszahl erfolgendes Erzeugen (201) eines asymmetrischen Schlüsselpaars für eine Datenanforderung, das einen ersten öffentlichen Schlüssel und einen ersten privaten Schlüssel umfasst, und Senden (101) der Datenanforderung, die den ersten öffentlichen Schlüssel trägt, an einen Server, wobei der erste öffentliche Schlüssel anders als ein oder mehrere andere öffentliche Schlüssel gemacht wird, die durch eine oder mehrere vorherige durch den Client gesendete Datenanforderungen getragen wurden, indem für jede der einen oder mehreren durch den Client gesendeten Datenanforderungen eine andere Zufallszahl verwendet wird, um für jede der einen oder mehreren durch den Client gesendeten Datenanforderungen ein anderes asymmetrisches Schlüsselpaar zu erzeugen; dann
Empfangen (202) eines Chiffretextes und eines zweiten öffentlichen Schlüssels, die durch den Server gesendet werden, wobei der zweite öffentliche Schlüssel ein öffentlicher Schlüssel in einem asymmetrischen Schlüsselpaar ist, das durch den Server als Antwort auf die durch den Client gesendete Datenanforderung erlangt wird; wobei
das asymmetrische Schlüsselpaar, das durch den Server als Antwort auf die durch den Client gesendete Datenanforderung erlangt wird, auch für jede der einen oder mehreren durch den Client gesendeten Datenanforderungen anders ist und ferner einen zweiten privaten Schlüssel umfasst; und wobei
der Chiffretext Informationen darstellt, die durch Verschlüsseln von Seed-Parametern zum Erzeugen eines Offline-Zahlungscodes unter Verwendung eines gemeinsam genutzten Schlüssels erlangt wird;
wobei der gemeinsam genutzte Schlüssel ein symmetrischer Schlüssel ist, der auf der Grundlage des zweiten privaten Schlüssels und des ersten öffentlichen Schlüssels unter Verwendung eines voreingestellten Schlüsselvereinbarungsalgorithmus erzeugt wird; dann
Erzeugen (203) eines gemeinsam genutzten Schlüssels auf der Grundlage des ersten privaten Schlüssels und des zweiten öffentlichen Schlüssels unter Verwendung des Schlüsselvereinbarungsalgorithmus, und Verwenden des auf dem ersten privaten Schlüssel und dem zweiten öffentlichen Schlüssel beruhenden gemeinsam genutzten Schlüssels unter Verwendung des Schlüsselvereinbarungsalgorithmus, um den Chiffretext zu entschlüsseln, um den Seed-Parameter zu erlangen;
wobei der gemeinsam genutzte Schlüssel, der auf der Grundlage des zweiten privaten Schlüssels und des ersten öffentlichen Schlüssels unter Verwendung des voreingestellten Schlüsselvereinbarungsalgorithmus erzeugt wird, identisch mit dem gemeinsam genutzten Schlüssel ist, der auf der Grundlage des ersten privaten Schlüssels und des zweiten öffentlichen Schlüssels unter Verwendung des Schlüsselvereinbarungsalgorithmus erzeugt wird, und für jede der einen oder mehreren durch den Client gesendeten Datenanforderungen anders ist.

2. Verfahren nach Anspruch 1, wobei das Senden einer Datenanforderung, die den ersten öffentlichen Schlüssel trägt, an einen Server umfasst:
Verwenden eines privaten Schlüssels in einem Client-Zertifikat, um den ersten öffentlichen Schlüssel zu signieren, um erste Signaturinformation zu erlangen, wobei das Client-Zertifikat ein Zertifikat ist, das durch eine dafür ausersehene Institution an den Client ausgegeben wurde;
Senden einer Datenanforderung, die den ersten öffentlichen Schlüssel und die ersten Signaturinformationen trägt, an einen Server, sodass der Server einen öffentlichen Schlüssel im Client-Zertifikat und den ersten öffentlichen Schlüssel verwendet, um die ersten Signaturinformationen zu überprüfen, und den Chiffretext und den zweiten öffentlichen Schlüssel an den Client sendet, wenn die Überprüfung erfolgreich ist.

3. Verfahren nach Anspruch 1 oder 2, wobei der Client sich in einer tragbaren Vorrichtung befindet.

4. Verfahren nach Anspruch 3, wobei die tragbare Vorrichtung ein intelligentes Armband umfasst.

5. Verfahren zur sicheren Übertragung eines Seed-Parameters zum Erzeugen eines Offline-Zahlungscodes; wobei das Verfahren in einem Server anwendbar ist und umfasst:
Empfangen (301) einer Datenanforderung, die einen ersten öffentlichen Schlüssel trägt und durch einen Client gesendet wird, wobei die empfangene Datenanforderung zum Auffordern des Servers dient, den Seed-Parameter zum Erzeugen eines Offline-Zahlungscodes zurückzusenden, wobei der erste öffentliche Schlüssel ein öffentlicher Schlüssel in einem durch den Client erzeugten asymmetrischen Schlüsselpaar ist und das durch den Client erzeugte asymmetrische Schlüsselpaar ferner einen ersten privaten Schlüssel umfasst, und wobei der erste öffentliche Schlüssel anders als jeder von einem oder mehreren anderen öffentlichen Schlüsseln gemacht wird, die durch eine oder mehrere vorherige durch den Client gesendete Datenanforderungen getragen wurden;
als Antwort auf die empfangene Datenanforderung erfolgendes Erlangen (302) eines asymmetrischen Schlüsselpaars, das einen zweiten öffentlichen Schlüssel und einen zweiten privaten Schlüssel umfasst; wobei das erlangte asymmetrische Schlüsselpaar für jede der einen oder mehreren durch den Client gesendeten Datenanforderungen anders ist; dann
Erzeugen eines gemeinsam genutzten Schlüssels auf der Grundlage des zweiten privaten Schlüssels und des ersten öffentlichen Schlüssels unter Verwendung eines voreingestellten Schlüsselvereinbarungsalgorithmus, wobei der erzeugte gemeinsam genutzte Schlüssel ein symmetrischer Schlüssel ist; dann
Verwenden (303) des erzeugten gemeinsam genutzten Schlüssels, um den Seed-Parameter zu verschlüsseln, dem die Datenanforderung entspricht, zum Erlangen eines Chiffretextes, und Senden des erlangten Chiffretextes und des zweiten öffentlichen Schlüssels an den Client, sodass der Client einen gemeinsam genutzten Schlüssel auf der Grundlage des ersten privaten Schlüssels und des zweiten öffentlichen Schlüssels unter Verwendung des Schlüsselvereinbarungsalgorithmus erzeugt und den auf der Grundlage des ersten privaten Schlüssels und des zweiten öffentlichen Schlüssels unter Verwendung des Schlüsselvereinbarungsalgorithmus erzeugten gemeinsam genutzten Schlüssel verwendet, um den Chiffretext zu entschlüsseln und den Seed-Parameter zu erlangen;
wobei der gemeinsam genutzte Schlüssel, der auf der Grundlage des zweiten privaten Schlüssels und des ersten öffentlichen Schlüssels unter Verwendung des voreingestellten Schlüsselvereinbarungsalgorithmus erzeugt wird, identisch mit dem gemeinsam genutzten Schlüssel ist, der auf der Grundlage des ersten privaten Schlüssels und des zweiten öffentlichen Schlüssels unter Verwendung des Schlüsselvereinbarungsalgorithmus erzeugt wird, und für jede der einen oder mehreren durch den Client gesendeten Datenanforderungen anders ist.

6. Verfahren nach Anspruch 5, wobei das Verfahren ferner umfasst:
Verwenden eines privaten Schlüssels in einem Server-Zertifikat, um den zweiten öffentlichen Schlüssel zu signieren, um zweite Signaturinformationen zu erlangen, wobei das Client-Zertifikat ein Zertifikat ist, das durch eine dafür ausersehene Institution an den Client ausgegeben wurde;
während des Sendens des durch Verschlüsselung erlangten Chiffretextes und des zweiten öffentlichen Schlüssels an den Client außerdem erfolgendes Senden der zweiten Signaturinformationen an den Client, sodass der Client die zweiten Signaturinformationen auf der Grundlage eines öffentlichen Schlüssels im Server-Zertifikat und des zweiten öffentlichen Schlüssels überprüft und den Chiffretext entschlüsselt, wenn die Überprüfung erfolgreich ist.

7. Verfahren zur sicheren Übermittlung eines Seed-Parameters zum Erzeugen eines Offline-Zahlungscodes; wobei das Verfahren umfasst:
durch ein Datenanforderer-Endgerät unter Verwendung einer Zufallszahl erfolgendes Erzeugen (101) eines asymmetrischen Schlüsselpaars für eine Datenanforderung, das einen ersten öffentlichen Schlüssel und einen ersten privaten Schlüssel umfasst, und Senden (102) der Datenanforderung, die den ersten öffentlichen Schlüssel trägt, an ein Datenanbieter-Endgerät, wobei der erste öffentliche Schlüssel anders als ein oder mehrere andere öffentliche Schlüssel gemacht wird, die durch eine oder mehrere vorherige durch das Datenanforderer-Endgerät gesendete Datenanforderungen getragen wurden, indem für jede der einen oder mehreren durch das Datenanforderer-Endgerät gesendeten Datenanforderungen eine andere Zufallszahl verwendet wird, um für jede der einen oder mehreren durch das Datenanforderer-Endgerät gesendeten Datenanforderungen ein anderes asymmetrisches Schlüsselpaar zu erzeugen; dann
Erlangen (103) eines asymmetrischen Schlüsselpaars, das einen zweiten öffentlichen Schlüssel und einen zweiten privaten Schlüssel umfasst, durch das Datenanbieter-Endgerät als Antwort auf die durch das Datenanforderer-Endgerät gesendete Datenanforderung; wobei das erlangte asymmetrische Schlüsselpaar für jede der einen oder mehreren durch das Datenanforderer-Endgerät gesendeten Datenanforderungen anders ist, und Erzeugen (104) eines gemeinsam genutzten Schlüssels durch das Datenanbieter-Endgerät auf der Grundlage des zweiten privaten Schlüssels und des ersten öffentlichen Schlüssels unter Verwendung eines voreingestellten Schlüsselvereinbarungsalgorithmus, wobei der erzeugte gemeinsam genutzte Schlüssel ein symmetrischer Schlüssel ist; dann
durch das Datenanbieter-Endgerät erfolgendes Verwenden (106) des erzeugten gemeinsam genutzten Schlüssels, um den Seed-Parameter zum Erzeugen eines Offline-Zahlungscodes, dem die Datenanforderung entspricht, zu verschlüsseln, um einen Chiffretext zu erlangen; und Senden (106) des erlangten Chiffretextes und des zweiten öffentlichen Schlüssels an das Datenanforderer-Endgerät;
durch das Datenanforderer-Endgerät erfolgendes Erzeugen (107) eines gemeinsam genutzten symmetrischen Schlüssels auf der Grundlage des ersten privaten Schlüssels und des zweiten öffentlichen Schlüssels unter Verwendung des Schlüsselvereinbarungsalgorithmus und Verwenden (108) des gemeinsam genutzten Schlüssels, der auf der Grundlage des ersten privaten Schlüssels und des zweiten öffentlichen Schlüssels unter Verwendung des Schlüsselvereinbarungsalgorithmus erzeugt wurde, um den Chiffretext zu entschlüsseln, um den Seed-Parameter zum Erzeugen eines Offline-Zahlungscodes zu erlangen;
wobei der gemeinsam genutzte Schlüssel, der auf der Grundlage des zweiten privaten Schlüssels und des ersten öffentlichen Schlüssels unter Verwendung des voreingestellten Schlüsselvereinbarungsalgorithmus erzeugt wird, identisch mit dem gemeinsam genutzten Schlüssel ist, der auf der Grundlage des ersten privaten Schlüssels und des zweiten öffentlichen Schlüssels unter Verwendung des Schlüsselvereinbarungsalgorithmus erzeugt wurde, und für jede der einen oder mehreren durch das Datenanforderer-Endgerät gesendeten Datenanforderungen anders ist.

8. Verfahren nach Anspruch 7, wobei das Senden einer Datenanforderung, die den ersten öffentlichen Schlüssel trägt, an ein Datenanbieter-Endgerät umfasst:
durch das Datenanforderer-Endgerät erfolgendes Verwenden eines privaten Schlüssels in einem Anforderer-Zertifikat, um den ersten öffentlichen Schlüssel zu signieren, um erste Signaturinformation zu erlangen, wobei das Anforderer-Zertifikat ein Zertifikat ist, das durch eine dafür ausersehene Institution an das Datenanforderer-Endgerät ausgegeben wurde;
durch das Datenanforderer-Endgerät erfolgendes Senden einer Datenanforderung, die den ersten öffentlichen Schlüssel und die erste Signaturinformation trägt, an das Datenanbieter- Endgerät;
wobei das Verfahren ferner umfasst: durch das Datenanbieter-Endgerät erfolgendes Überprüfen der ersten Signaturinformation auf der Grundlage eines öffentlichen Schlüssels im Anforderer-Zertifikat und des ersten öffentlichen Schlüssels, und durch das Datenanforderer-Endgerät erfolgendes Senden des Chiffretextes und des zweiten öffentlichen Schlüssels an das Datenanforderer-Endgerät, wenn die Überprüfung erfolgreich ist.

9. Verfahren nach Anspruch 7, wobei das Verfahren ferner umfasst:
durch das Datenanbieter-Endgerät erfolgendes Verwenden eines privaten Schlüssels in einem Anbieter-Zertifikat, um den zweiten öffentlichen Schlüssel zu signieren, um zweite Signaturinformation zu erlangen, wobei das Anbieter-Zertifikat ein Zertifikat ist, das durch eine dafür ausersehene Institution an das Datenanbieter-Endgerät ausgegeben wurde;
wenn das Datenanbieter-Endgerät den durch Verschlüsselung erlangten Chiffretext und den zweiten öffentlichen Schlüssel an das Datenanforderer-Endgerät sendet, ferner durch das Datenanbieter-Endgerät erfolgendes Senden der zweiten Signaturinformation an das Datenanforderer-Endgerät;
durch das Datenanforderer-Endgerät erfolgendes Überprüfen der zweiten Signaturinformation auf der Grundlage eines öffentlichen Schlüssels im Anbieter-Zertifikat und des zweiten öffentlichen Schlüssels, und durch das Datenanforderer-Endgerät erfolgendes Entschlüsseln des Chiffretextes, wenn die Überprüfung erfolgreich ist.

10. Client-Datenvorrichtung zur sicheren Übermittlung eines Seed-Parameters zum Erzeugen eines Offline-Zahlungscodes, wobei die Client-Vorrichtung umfasst:
ein Schlüsselerzeugungsmodul (51), das dafür konfiguriert ist, unter Verwendung einer Zufallszahl ein asymmetrisches Schlüsselpaar für eine Datenanforderung zu erzeugen, das einen ersten öffentlichen Schlüssel und einen ersten privaten Schlüssel umfasst, wobei der erste öffentliche Schlüssel anders als ein oder mehrere andere öffentliche Schlüssel gemacht wird, die durch eine oder mehrere vorherige Datenanforderungen getragen wurden, indem für jede der einen oder mehreren Datenanforderungen eine andere Zufallszahl verwendet wird, um für jede der einen oder mehreren Datenanforderungen ein anderes asymmetrisches Schlüsselpaar zu erzeugen;
ein Anforderungssendemodul (52), das dafür konfiguriert ist, die Datenanforderung, die den ersten öffentlichen Schlüssel trägt, an einen Server zu senden;
ein Informationsempfangmodul (53), das dafür konfiguriert ist, einen Chiffretext und einen zweiten öffentlichen Schlüssel zu empfangen, die durch den Server gesendet werden, wobei der zweite öffentliche Schlüssel ein öffentlicher Schlüssel in einem asymmetrischen Schlüsselpaar ist, das durch den Server als Antwort auf die durch das Anforderungssendemodul (52) gesendete Datenanforderung erlangt wird; wobei das durch den Server erlangte asymmetrische Schlüsselpaar für jede der einen oder mehreren Datenanforderungen anders ist;
wobei das durch den Server erlangte asymmetrische Schlüsselpaar ferner einen zweiten privaten Schlüssel umfasst; und wobei der durch das Informationsempfangmodul (53) empfangene Chiffretext durch den Server durch Verschlüsseln des Seed-Parameters zum Erzeugen eines Offline-Zahlungscodes unter Verwendung eines gemeinsam genutzten symmetrischen Schlüssels erlangt wird; wobei der gemeinsam genutzte Schlüssel ein symmetrischer Schlüssel ist, der durch den Server auf der Grundlage des zweiten privaten Schlüssels und des ersten öffentlichen Schlüssels unter Verwendung eines voreingestellten Schlüsselvereinbarungsalgorithmus erzeugt wird;
ein Modul (54) zur Erzeugung gemeinsam genutzter Schlüssel zum Erzeugen eines gemeinsam genutzten Schlüssels auf der Grundlage des ersten privaten Schlüssels und des zweiten öffentlichen Schlüssels unter Verwendung des Schlüsselvereinbarungsalgorithmus;
ein Informationsentschlüsselungsmodul (55) zum Verwenden des gemeinsam genutzten Schlüssels, der durch das Modul zur Erzeugung gemeinsam genutzter Schlüssel auf der Grundlage des ersten privaten Schlüssels und des zweiten öffentlichen Schlüssels erzeugt wird, um den durch das Informationsempfangmodul (53) vom Server empfangenen Chiffretext zu entschlüsseln, um den Seed-Parameter zu erlangen;
wobei der gemeinsam genutzte Schlüssel, der auf der Grundlage des zweiten privaten Schlüssels und des ersten öffentlichen Schlüssels unter Verwendung des voreingestellten Schlüsselvereinbarungsalgorithmus erzeugt wird, identisch mit dem gemeinsam genutzten Schlüssel ist, der auf der Grundlage des ersten privaten Schlüssels und des zweiten öffentlichen Schlüssels unter Verwendung des Schlüsselvereinbarungsalgorithmus erzeugt wird, und für jede der einen oder mehreren Datenanforderungen anders ist.

11. Server-Vorrichtung zur sicheren Übermittlung eines Seed-Parameters zum Erzeugen eines Offline-Zahlungscodes; wobei die Server-Vorrichtung umfasst:
ein Anforderungsempfangmodul (61), das dafür konfiguriert ist, eine Datenanforderung zu empfangen, die einen ersten öffentlichen Schlüssel trägt, der durch einen Client gesendet wird, wobei die empfangene Datenanforderung zum Auffordern des Servers dient, einen Seed-Parameter zum Erzeugen eines Offline-Zahlungscodes zurückzusenden, wobei der erste öffentliche Schlüssel, der innerhalb der durch das Anforderungsempfangmodul empfangenen Datenanforderung getragen wird, ein öffentlicher Schlüssel in einem durch den Client erzeugten asymmetrischen Schlüsselpaar ist, wobei das durch den Client erzeugte asymmetrische Schlüsselpaar ferner einen ersten privaten Schlüssel umfasst, und wobei der erste öffentliche Schlüssel, der innerhalb der durch das Anforderungsempfangmodul empfangenen Datenanforderung getragen wird, anders als jeder von einem oder mehreren anderen öffentlichen Schlüsseln gemacht wird, die durch eine oder mehrere vorherige durch den Client gesendete Datenanforderungen getragen wurden;
ein Schlüsselerlangungsmodul (62), das dafür konfiguriert ist, als Antwort auf die durch das Anforderungsempfangmodul (61) empfangene Datenanforderung ein asymmetrisches Schlüsselpaar zu erlangen, das einen zweiten öffentlichen Schlüssel und einen zweiten privaten Schlüssel umfasst; wobei das erlangte asymmetrische Schlüsselpaar für jede der einen oder mehreren durch den Client gesendeten Datenanforderungen anders ist;
ein Modul (63) zur Erzeugung gemeinsam genutzter Schlüssel, das dafür konfiguriert ist, einen gemeinsam genutzten Schlüssel auf der Grundlage des zweiten privaten Schlüssels und des ersten öffentlichen Schlüssels unter Verwendung eines voreingestellten Schlüsselvereinbarungsalgorithmus zu erzeugen, wobei der erzeugte gemeinsam genutzte Schlüssel ein symmetrischer Schlüssel ist;
ein Informationsverschlüsselungsmodul (64), das dafür konfiguriert ist, den durch das Modul (63) zur Erzeugung gemeinsam genutzter Schlüssel erzeugten gemeinsam genutzten Schlüssel zu verwenden, um einen Seed-Parameter zum Erzeugen eines Offline-Zahlungscodes, dem die empfangene Datenanforderung entspricht, zum Erlangen eines Chiffretextes zu verschlüsseln;
ein Informationssendemodul (65), das dafür konfiguriert ist, den erlangten Chiffretext und den zweiten öffentlichen Schlüssel an den Client zu senden, sodass der Client auf der Grundlage des ersten privaten Schlüssels und des zweiten öffentlichen Schlüssels unter Verwendung des Schlüsselvereinbarungsalgorithmus einen gemeinsam genutzten Schlüssel erzeugt und den gemeinsam genutzten Schlüssel verwendet, um den durch das Informationssendemodul (65) gesendeten Chiffretext zum Erlangen des Seed-Parameters zum Erzeugen eines Offline-Zahlungscodes zu entschlüsseln;
wobei der gemeinsam genutzte Schlüssel, der auf der Grundlage des zweiten privaten Schlüssels und des ersten öffentlichen Schlüssels unter Verwendung des voreingestellten Schlüsselvereinbarungsalgorithmus erzeugt wird, identisch mit dem gemeinsam genutzten Schlüssel ist, der auf der Grundlage des ersten privaten Schlüssels und des zweiten öffentlichen Schlüssels unter Verwendung des Schlüsselvereinbarungsalgorithmus erzeugt wird, und für jede der einen oder mehreren durch den Client gesendeten Datenanforderungen anders ist.

12. Datenübermittlungssystem zur sicheren Übermittlung eines Seed-Parameters zum Erzeugen eines Offline-Zahlungscodes; wobei das Datenübertragungssystem die Client-Vorrichtung nach Anspruch 10 und die Server-Vorrichtung nach Anspruch 11 umfasst.

## Revendications

1. Procédé de communication sécurisée d'un paramètre de départ en vue de générer un code de paiement hors ligne ;
dans lequel le procédé est applicable dans un dispositif client et comprend les étapes ci-dessous consistant à :
générer (201), en utilisant un nombre aléatoire, une paire de clés asymétriques comprenant une première clé publique et une première clé privée pour une demande de données, et envoyer (101) la demande de données portant la première clé publique à un serveur, dans lequel la première clé publique est rendue différente d'une ou plusieurs autres clés publiques portées par une ou plusieurs demandes de données antérieures envoyées par le dispositif client, en utilisant un nombre aléatoire différent pour chacune de ladite une ou desdites plusieurs demandes de données envoyées par le dispositif client en vue de générer une paire de clés asymétriques différente pour chacune de ladite une ou desdites plusieurs demandes de données envoyées par le dispositif client ; ensuite
recevoir (202) un texte chiffré et une seconde clé publique envoyés par le serveur, dans lequel la seconde clé publique est une clé publique dans une paire de clés asymétriques obtenue par le serveur en réponse à la demande de données envoyée par le dispositif client ; dans lequel la paire de clés asymétriques obtenue par le serveur en réponse à la demande de données envoyée par le dispositif client est également différente pour chacune de ladite une ou desdites plusieurs demandes de données envoyées par le dispositif client, et comprend en outre une seconde clé privée ; et dans lequel le texte chiffré correspond à des informations obtenues en chiffrant le paramètre de départ en vue de générer un code de paiement hors ligne en utilisant une clé partagée ;
dans lequel la clé partagée est une clé symétrique générée sur la base de la seconde clé privée et de la première clé publique en utilisant un algorithme d'accord de clé prédéfini ; ensuite
générer (203) une clé partagée sur la base de la première clé privée et de la seconde clé publique, en utilisant l'algorithme d'accord de clé, et utiliser la clé partagée basée sur la première clé privée et la seconde clé publique en utilisant l'algorithme d'accord de clé en vue de déchiffrer le texte chiffré afin d'obtenir le paramètre de départ ;
dans lequel la clé partagée générée sur la base de la seconde clé privée et de la première clé publique en utilisant l'algorithme d'accord de clé prédéfini est identique à la clé partagée générée sur la base de la première clé privée et de la seconde clé publique en utilisant l'algorithme d'accord de clé, et est différente pour chacune de ladite une ou desdites plusieurs demandes de données envoyées par le dispositif client.

2. Procédé selon la revendication 1, dans lequel l'étape d'envoi d'une demande de données portant la première clé publique à un serveur comprend les étapes ci-dessous consistant à :
utiliser une clé privée dans un certificat de dispositif client pour signer la première clé publique en vue d'obtenir des premières informations de signature, dans lequel le certificat de dispositif client est un certificat délivré par une institution désignée au dispositif client ;
envoyer une demande de données portant la première clé publique et les premières informations de signature, à un serveur, de sorte que le serveur utilise une clé publique dans le certificat de dispositif client, et la première clé publique, en vue de vérifier les premières informations de signature, et envoie le texte chiffré et la seconde clé publique au dispositif client si la vérification est réussie.

3. Procédé selon la revendication 1 ou 2, dans lequel le dispositif client est localisé dans un dispositif portable.

4. Procédé selon la revendication 3, dans lequel le dispositif portable comprend un bracelet intelligent.

5. Procédé de communication sécurisée d'un paramètre de départ en vue de générer un code de paiement hors ligne ; dans lequel le procédé est applicable dans un serveur et comprend les étapes ci-dessous consistant à :
recevoir (301) une demande de données portant une première clé publique et envoyée par un dispositif client, dans lequel la demande de données reçue vise à demander au serveur de renvoyer le paramètre de départ en vue de générer un code de paiement hors ligne, dans lequel la première clé publique est une clé publique dans une paire de clés asymétriques générée par le dispositif client, et dans lequel la paire de clés asymétriques générée par le dispositif client comprend en outre une première clé privée, et dans lequel la première clé publique est rendue différente de chacune d'une ou plusieurs autres clés publiques portées par une ou plusieurs demandes de données antérieures envoyées par le dispositif client ;
obtenir (302), en réponse à la demande de données reçue, une paire de clés asymétriques comprenant une seconde clé publique et une seconde clé privée ; dans lequel la paire de clés asymétriques obtenue est différente pour chacune de ladite une ou desdites plusieurs demandes de données envoyées par le dispositif client ; ensuite
générer une clé partagée sur la base de la seconde clé privée et de la première clé publique, en utilisant un algorithme d'accord de clé prédéfini, dans lequel la clé partagée générée est une clé symétrique ; ensuite
utiliser (303) la clé partagée générée en vue de chiffrer le paramètre de départ auquel correspond la demande de données afin d'obtenir un texte chiffré, et envoyer le texte chiffré obtenu et la seconde clé publique au dispositif client, de sorte que le dispositif client génère une clé partagée sur la base de la première clé privée et de la seconde clé publique, en utilisant l'algorithme d'accord de clé, et utilise la clé partagée générée sur la base de la première clé privée et de la seconde clé publique en utilisant l'algorithme d'accord de clé en vue de déchiffrer le texte chiffré afin d'obtenir le paramètre de départ ;
dans lequel la clé partagée générée sur la base de la seconde clé privée et de la première clé publique en utilisant l'algorithme d'accord de clé prédéfini est identique à la clé partagée générée sur la base de la première clé privée et de la seconde clé publique en utilisant l'algorithme d'accord de clé, et est différente pour chacune de ladite une ou desdites plusieurs demandes de données envoyées par le dispositif client.

6. Procédé selon la revendication 5, dans lequel le procédé comprend en outre les étapes ci-dessous consistant à :
utiliser une clé privée dans un certificat de serveur en vue de signer la seconde clé publique afin d'obtenir des secondes informations de signature, dans lequel le certificat de serveur est un certificat délivré par une institution désignée au serveur ; et
dans le cadre de l'envoi du texte chiffré obtenu à partir d'un chiffrement, et de la seconde clé publique, au dispositif client, envoyer également les secondes informations de signature au dispositif client, de sorte que le dispositif client vérifie les secondes informations de signature sur la base d'une clé publique dans le certificat de serveur, et de la seconde clé publique, et déchiffre le texte chiffré si la vérification est réussie.

7. Procédé de communication sécurisée d'un paramètre de départ en vue de générer un code de paiement hors ligne ; dans lequel le procédé comprend les étapes dans lesquelles :
un terminal de demandeur de données génère (101) une paire de clés asymétriques, en utilisant un nombre aléatoire, comprenant une première clé publique et une première clé privée pour une demande de données, et envoie (102) la demande de données portant la première clé publique vers un terminal de fournisseur de données, dans lequel la première clé publique est rendue différente d'une ou plusieurs autres clés publiques portées par une ou plusieurs demandes de données antérieures envoyées par le terminal de demandeur de données, en utilisant un nombre aléatoire différent pour chacune de ladite une ou desdites plusieurs demandes de données envoyées par le terminal de demandeur de données en vue de générer une paire de clés asymétriques différente pour chacune de ladite une ou desdites plusieurs demandes de données envoyées par le terminal de demandeur de données ; ensuite
le terminal de fournisseur de données obtient (103), en réponse à la demande de données envoyée par le terminal de demandeur de données, une paire de clés asymétriques comprenant une seconde clé publique et une seconde clé privée ;
dans lequel la paire de clés asymétriques obtenue est différente pour chacune de ladite une ou desdites plusieurs demandes de données envoyées par le terminal de demandeur de données, et le terminal de fournisseur de données (103) génère (104) une clé partagée sur la base de la seconde clé privée et de la première clé publique, en utilisant un algorithme d'accord de clé prédéfini, dans lequel la clé partagée générée est une clé symétrique ; ensuite
le terminal de fournisseur de données utilise (106) la clé partagée générée en vue de chiffrer le paramètre de départ afin de générer un code de paiement hors ligne auquel correspond la demande de données afin d'obtenir un texte chiffré ; et le terminal de fournisseur de données envoie (106) le texte chiffré obtenu et la seconde clé publique au terminal de demandeur de données ;
le terminal de demandeur de données génère (107) une clé symétrique partagée, sur la base de la première clé privée et de la seconde clé publique, en utilisant l'algorithme d'accord de clé, et utilise (108) la clé partagée générée sur la base de la première clé privée et de la seconde clé publique en utilisant l'algorithme d'accord de clé en vue de déchiffrer le texte chiffré afin d'obtenir le paramètre de départ, de manière à générer un code de paiement hors ligne ;
dans lequel la clé partagée générée sur la base de la seconde clé privée et de la première clé publique en utilisant l'algorithme d'accord de clé prédéfini est identique à la clé partagée générée sur la base de la première clé privée et de la seconde clé publique en utilisant l'algorithme d'accord de clé, et est différente pour chacune de ladite une ou desdites plusieurs demandes de données envoyées par le terminal de demandeur de données.

8. Procédé selon la revendication 7, dans lequel l'étape d'envoi d'une demande de données portant la première clé publique à un terminal de fournisseur de données comprend les étapes ci-dessous dans lesquelles :
le terminal de demandeur de données utilise une clé privée dans un certificat de demandeur pour signer la première clé publique afin d'obtenir les premières informations de signature, dans lequel le certificat de demandeur est un certificat délivré par une institution désignée au terminal de demandeur de données ;
le terminal de demandeur de données envoie une demande de données portant la première clé publique et les premières informations de signature au terminal de fournisseur de données ;
le procédé comprenant en outre les étapes ci-après dans lesquelles : le terminal de fournisseur de données vérifie les premières informations de signature sur la base d'une clé publique dans le certificat de demandeur, et de la première clé publique, et le terminal de fournisseur de données envoie le texte chiffré et la seconde clé publique au terminal de demandeur de données, si la vérification est réussie.

9. Procédé selon la revendication 7, dans lequel le procédé comprend en outre les étapes ci-dessous dans lesquelles :
le terminal de fournisseur de données utilise une clé privée dans un certificat de fournisseur pour signer la seconde clé publique afin d'obtenir des secondes informations de signature, dans lequel le certificat de fournisseur est un certificat délivré par une institution désignée au terminal de fournisseur de données ;
lorsque le terminal de fournisseur de données envoie le texte chiffré obtenu par chiffrement, et la seconde clé publique, au terminal de demandeur de données, le terminal de fournisseur de données envoie en outre les secondes informations de signature au terminal de demandeur de données ;
le terminal de demandeur de données vérifie les secondes informations de signature sur la base d'une clé publique dans le certificat de fournisseur, et de la seconde clé publique, et le terminal de demandeur de données déchiffre le texte chiffré, si la vérification est réussie.

10. Appareil client pour une communication sécurisée d'un paramètre de départ en vue de générer un code de paiement hors ligne, l'appareil client comprenant :
un module de génération de clés (51) configuré de manière à générer, en utilisant un nombre aléatoire, une paire de clés asymétriques comprenant une première clé publique et une première clé privée pour une demande de données, dans lequel la première clé publique est rendue différente d'une ou plusieurs autres clés publiques portées par une ou plusieurs demandes de données antérieures, en utilisant un nombre aléatoire différent pour chacune de ladite une ou desdites plusieurs demandes de données en vue de générer une paire de clés asymétriques différente pour chacune de ladite une ou desdites plusieurs demandes de données ;
un module d'envoi de demande (52) configuré de manière à envoyer la demande de données portant la première clé publique, à un serveur ;
un module de réception d'informations (53) configuré de manière à recevoir un texte chiffré et une seconde clé publique envoyés par le serveur, dans lequel la seconde clé publique est une clé publique dans une paire de clés asymétriques obtenue par le serveur en réponse à la demande de données envoyée par le module d'envoi de demande (52) ;
dans lequel la paire de clés asymétriques obtenue par le serveur est différente pour chacune de ladite une ou desdites plusieurs demandes de données ;
dans lequel la paire de clés asymétriques obtenue par le serveur comprend en outre une seconde clé privée ; et
dans lequel le texte chiffré reçu par le module de réception d'informations (53) est obtenu, par le serveur, en chiffrant le paramètre de départ, en vue de générer un code de paiement hors ligne en utilisant une clé symétrique partagée ;
dans lequel la clé partagée est une clé symétrique générée par le serveur sur la base de la seconde clé privée et de la première clé publique, en utilisant un algorithme d'accord de clé prédéfini ;
un module de génération de clé partagée (54) destiné à générer une clé partagée sur la base de la première clé privée et de la seconde clé publique, en utilisant l'algorithme d'accord de clé ;
un module de déchiffrement d'informations (55) destiné à utiliser la clé partagée générée par le module de génération de clé partagée sur la base de la première clé privée et de la seconde clé publique, en vue de déchiffrer le texte chiffré reçu en provenance du serveur, par le module de réception d'informations (53), afin d'obtenir le paramètre de départ ;
dans lequel la clé partagée générée sur la base de la seconde clé privée et de la première clé publique en utilisant l'algorithme d'accord de clé prédéfini est identique à la clé partagée générée sur la base de la première clé privée et de la seconde clé publique en utilisant l'algorithme d'accord de clé, et est différente pour chacune de ladite une ou desdites plusieurs demandes de données.

11. Appareil serveur pour une communication sécurisée d'un paramètre de départ en vue de générer un code de paiement hors ligne ; l'appareil serveur comprenant :
un module de réception de demande (61) configuré de manière à recevoir une demande de données portant une première clé publique qui est envoyée par un dispositif client, dans lequel la demande de données reçue vise à demander, au serveur, de renvoyer, au dispositif client, le paramètre de départ, en vue de générer un code de paiement hors ligne, dans lequel la première clé publique portée dans la demande de données reçue par le module de réception de demande est une clé publique dans une paire de clés asymétriques générée par le dispositif client, dans lequel la paire de clés asymétriques générée par le dispositif client comprend en outre une première clé privée, et dans lequel la première clé publique portée dans la demande de données reçue par le module de réception de demande est rendue différente de chacune d'une ou plusieurs autres clés publiques portées par une ou plusieurs demandes de données antérieures envoyées par le dispositif client ;
un module d'obtention de clés (62) configuré de manière à obtenir une paire de clés asymétriques comprenant une seconde clé publique et une seconde clé privée, en réponse à la demande de données reçue par le module de réception de demande (61) ;
dans lequel la paire de clés asymétriques obtenue est différente pour chacune de ladite une ou desdites plusieurs demandes de données envoyées par le dispositif client ;
un module de génération de clé partagée (63) configuré de manière à générer une clé partagée, sur la base de la seconde clé privée et de la première clé publique, en utilisant un algorithme d'accord de clé prédéfini, dans lequel la clé partagée générée est une clé symétrique ;
un module de chiffrement d'informations (64) configuré de manière à utiliser la clé partagée générée par le module de génération de clé partagée (63) en vue de chiffrer un paramètre de départ afin de générer un code de paiement hors ligne auquel correspond la demande de données reçue, de manière à obtenir un texte chiffré ;
un module d'envoi d'informations (65) configuré de manière à envoyer le texte chiffré obtenu et la seconde clé publique, au dispositif client, de sorte que le dispositif client génère une clé partagée sur la base de la première clé privée et de la seconde clé publique, en utilisant l'algorithme d'accord de clé, et utilise la clé partagée en vue de déchiffrer le texte chiffré envoyé par le module d'envoi d'informations (65), afin d'obtenir le paramètre de départ, en vue de générer un code de paiement hors ligne ;
dans lequel la clé partagée générée sur la base de la seconde clé privée et de la première clé publique en utilisant l'algorithme d'accord de clé prédéfini est identique à la clé partagée générée sur la base de la première clé privée et de la seconde clé publique en utilisant l'algorithme d'accord de clé, et est différente pour chacune de ladite une ou desdites plusieurs demandes de données envoyées par le dispositif client.

12. Système de communication de données pour une communication sécurisée d'un paramètre de départ en vue de générer un code de paiement hors ligne ; dans lequel le système de transmission de données comprend l'appareil client selon la revendication 10 et l'appareil serveur selon la revendication 11.
